# EUROPEAN PATENT APPLICATION

(11) **EP 4 579 116 A1**
(43) Date of publication of application: **02.07.2025**
(21) Application number: 22956619.5
(22) Date of filing: 16.12.2022
(51) Int. Cl.: F16M 11/22, F16M 11/14

(54) **DISPLAY DEVICE**

(30) Priority: 26.08.2022 KR 20220107749
(71) Applicant: LG Electronics Inc., Yeongdeungpo-gu Seoul 07336 (KR)
(72) Inventor: LEE, Kangyeung, Seoul 06772 (KR); KWON, Seokho, Seoul 06772 (KR); KIM, Sanghoon, Seoul 06772 (KR)
(74) Representative: Schornack, Oliver
(86) International application number: PCT/KR2022/020646
(87) International publication number: WO 2024/043414

(57) **Abstract**

A display device is disclosed. The display device according to the present disclosure includes: a head including a display panel; a stand which supports the head and which is detachably coupled to the head; and a mount positioned between the head and the stand and fixed to the stand, wherein the mount includes: a slider which is coupled to the inside of the mount, and which moves in a first direction from one side of the head to the other side or in a second direction that is opposite to the first direction; and a hook which extends from the slider in the direction from the inside of the mount to the outside of the mount, and which moves together with the slider.

## Description

### TECHNICAL FIELD

The present disclosure relates to a display device.

### BACKGROUND ART

With the development of information society, demand for various kinds of display devices is increasing. In response to this demand, various kinds of display devices, such as LCDs (Liquid Crystal Displays), PDPs (Plasma Display Panels), ELDs (Electro luminescent Displays), VFDs (Vacuum Fluorescent Displays) and OLED (Organic Light-Emitting Diode) displays have recently been researched and used.

Thereamong, an LCD panel includes a TFT substrate and a color substrate, which face each other with a liquid crystal layer interposed therebetween, in order to display an image using light supplied from a backlight unit. Meanwhile, an OLED panel is configured to display an image using a self-luminescent organic layer deposited on a substrate having a transparent electrode formed thereon.

In recent years, a great deal of research is being conducted on an attachment and detachment structure between a display and a stand.

### DETAILED DESCRIPTION OF INVENTION

### TECHNICAL PROBLEMS

It is an object of the present disclosure to solve the above and other problems.

Another object may be to provide a display device including a stand supporting a head.

Another object may be to provide a structure capable of freely adjusting an angle and a height of the head.

Another object may be to provide a structure capable of freely changing position of the stand supporting the head.

Another object may be to provide an attachment and detachment structure between the head and the stand.

Another object may be to provide an automatic fastening structure between the head and the stand.

### TECHNICAL SOLUTION

In accordance with an aspect of the present disclosure for achieving the above and other objects, a display device includes: a head including a display panel; a stand supporting the head and detachably coupled to the head; and a mount positioned between the head and the stand and fixed to the stand, wherein the mount includes: a slider coupled in the mount and moved in a first direction from one side of the head toward another side of the head or in a second direction opposite to the first direction; and a hook extending from the slider in an outward direction of the mount from an inside of the mount, and moving along with the slider.

### EFFECT OF INVENTION

The effects of the display device according to the present disclosure will be described as follows.

According to at least one of embodiments of the present disclosure, it is possible to provide a display device including a stand supporting a head.

According to at least one of embodiments of the present disclosure, it is possible to provide a structure capable of freely adjusting an angle and a height of the head.

According to at least one of embodiments of the present disclosure, it is possible to provide a structure capable of freely changing position of the stand supporting the head.

According to at least one of embodiments of the present disclosure, it is possible to provide an attachment and detachment structure between the head and the stand.

According to at least one of embodiments of the present disclosure, it is possible to provide an automatic fastening structure between the head and the stand.

The additional scope of applicability of the present disclosure will be apparent from the above detailed description. However, those skilled in the art will appreciate that various modifications and alterations are possible, without departing from the idea and scope of the present disclosure, and therefore it should be understood that the detailed description and specific embodiments, such as the preferred embodiments of the present disclosure, are provided only for illustration.

### BRIEF DESCRIPTION OF THE DRAWING

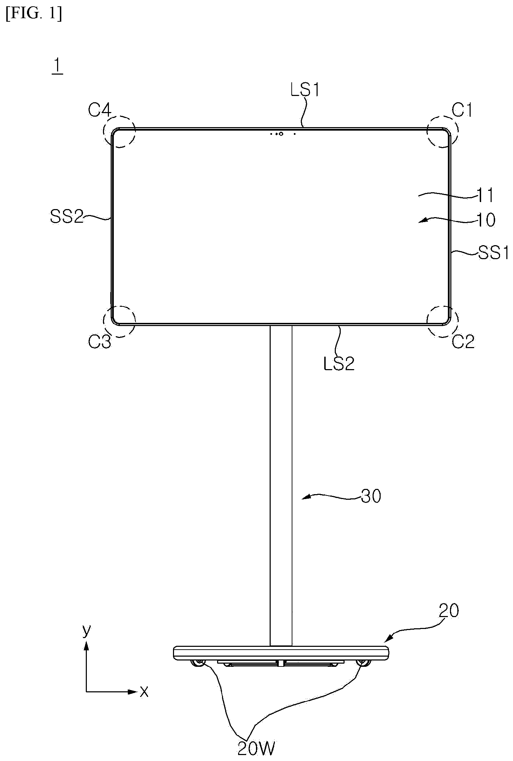

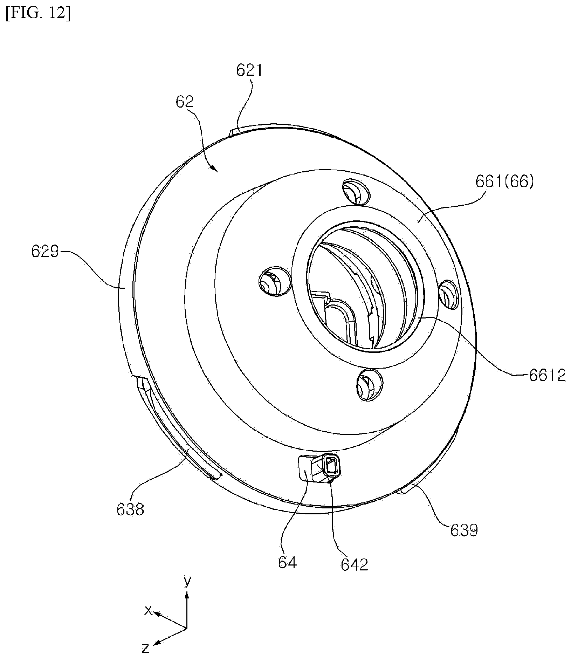

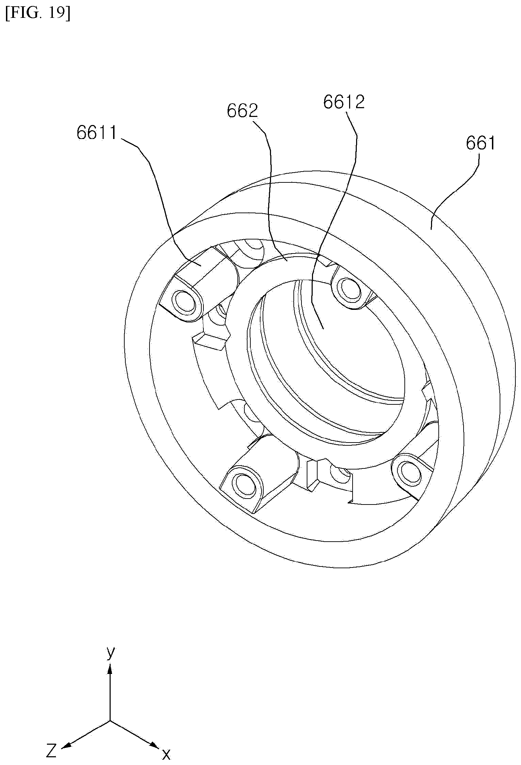

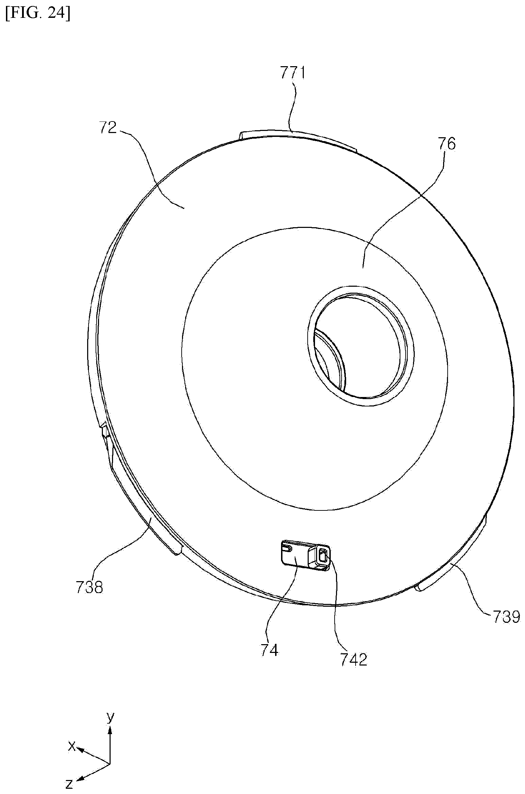

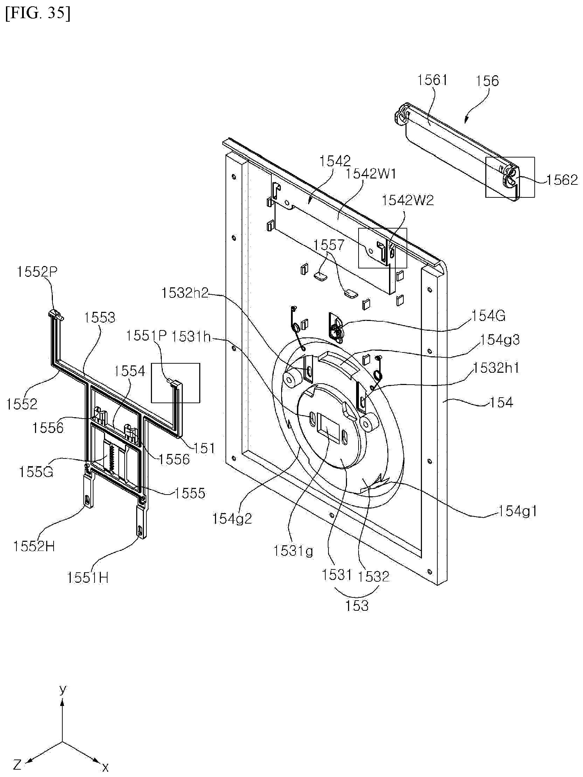

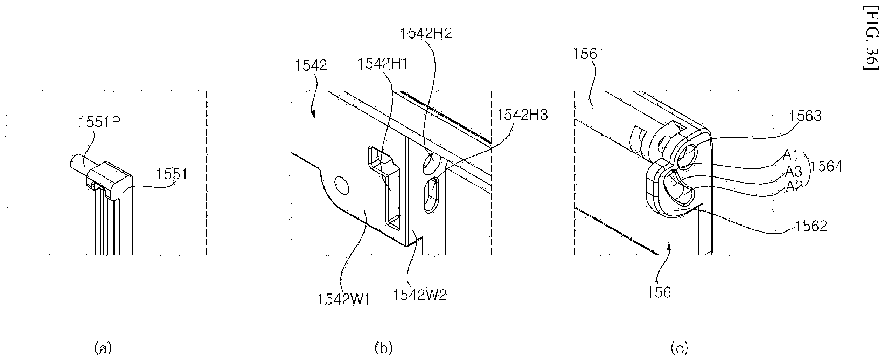

FIGS. 1 to 42 are diagrams illustrating examples of a display device according to embodiments of the present disclosure.

### MODE FOR CARRYING OUT THE INVENTION

A description will now be given in detail according to exemplary embodiments disclosed herein, with reference to the accompanying drawings. For the sake of brevity of description with reference to the drawings, the same or equivalent components are denoted by the same reference numbers, and a description thereof will not be repeated.

In general, suffixes such as "module" and "unit" used to refer to elements or components herein are merely intended to facilitate description of the specification, and the suffixes do not have any special meaning or function.

In the present disclosure, that which is well known to one of ordinary skill in the relevant art has generally been omitted for the sake of brevity. The accompanying drawings are used to facilitate understanding of various technical features, and it should be understood that the embodiments presented herein are not limited by the accompanying drawings. As such, the present disclosure should be construed to extend to any alterations, equivalents and substitutes, in addition to those that are particularly set out in the accompanying drawings.

It is to be understood that, although the terms "first," "second," etc. may be used herein to describe various elements, these elements should not be limited by these terms. These terms are only used to distinguish one element from another.

It will be understood that when an element is referred to as being "connected to" another element, intervening elements may be present. In contrast, it will be understood that when an element is referred to as being "directly connected to" another element, there are no intervening elements present.

A singular representation may include a plural representation unless the context clearly indicates otherwise.

In the present disclosure, it should be understood that the terms "comprises," "includes," "has," etc. specify the presence of features, numbers, steps, operations, elements, components, or combinations thereof described in the specification, but do not preclude the presence or addition of one or more other features, numbers, steps, operations, elements, components, or combinations thereof.

Indication of directions of upward U, downward D, leftward Le, rightward Ri, forward F, and rearward R is merely for convenience of description, and the technical idea disclosed in the present disclosure is not limited thereto.

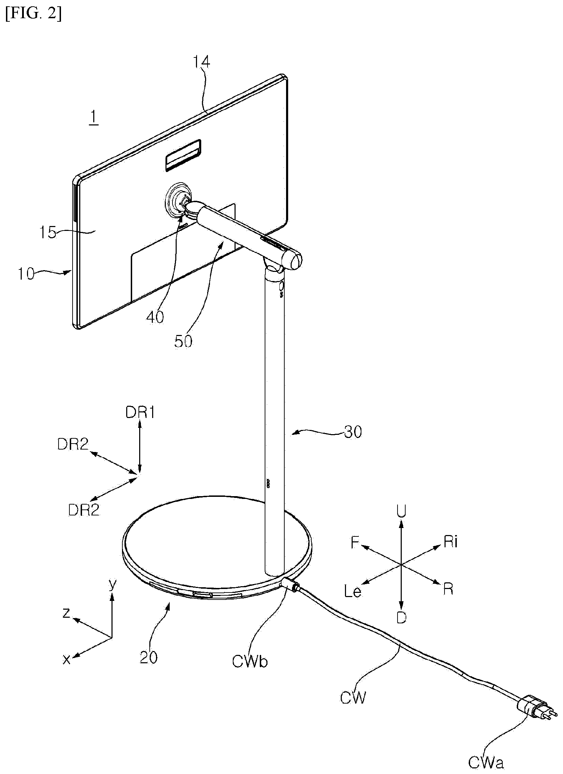

Referring to FIGs. 1 and 2, the display device 1 may include a head 10. The head 10 may display an image. The head 10 may be referred to as a display 10 or a display unit.

The head 10 may include a first long side LS1, a second long side LS2 opposite to the first long side LS1, a first short side SS1 adjacent to the first long side LS1 and the second long side LS2, and a second short side SS2 opposite to the first short side SS1. Although each of the first and second long sides LS1 and LS2 is illustrated and described as being longer than each of the first and second short sides SS1 and SS2 for convenience of explanation, the length of each of the first and second long sides LS1 and LS2 may be almost the same as that of each of the first and second short sides SS1 and SS2.

A direction parallel to the short sides SS1 and SS2 of the head 10 may be referred to as a first direction or up-and-down direction DR1. A direction parallel to the long sides LS1 and LS2 of the head 10 may be referred to as a second direction or rightward-and-leftward direction DR3.

A direction in which the head 10 displays an image may be referred to as a forward direction F or z, and the direction opposite the forward direction may be referred to as a rearward direction R. A direction toward the first short side SS1 may be referred to as a leftward direction Le or x. A direction toward the second short side SS2 may be referred to as a rightward direction Ri. A direction toward the first long side LS1 may be referred to as an upward direction U or y. A direction toward the second long side LS2 may be referred to as a downward direction D.

The first long side LS1, the second long side LS2, the first short side SS1, and the second short side SS2 may be referred to as an edge of the head 10. Points at which the first long side LS1, the second long side LS2, the first short side SS1, and the second short side SS2 meet each other may be referred to as corners.

The point at which the first short side SS1 and the second long side LS1 meet each other may be a first corner C1. The point at which the first short side SS1 and the second long side LS2 meet each other may be a second corner C2. The point at which the second short side SS2 and the second long side LS2 meet each other may be a third corner C3. The point at which the second short side SS2 and the first long side LS1 meet each other may be a fourth corner C4.

The display device 1 may include a base 20, a pole 30, a support arm 50, and a connector 40.

The base 20 may have the shape of a generally flat cylinder. The base 20 may be placed on the ground surface. A wheel 20W may be mounted on the lower surface of the base 20. The wheel 20W may include a plurality of wheels 20W. A user may freely move the display device 1 placed on the ground surface by means of the wheel 20W.

The pole 30 may extend in a vertical direction. The lower end of the pole 30 may be coupled to the base 20. The pole 30 may be adjacent to the periphery of the base 20.

The support arm 50 may extend in a direction which intersects the pole 30. The support arm 50 may extend in a direction which intersects both the pole 30 and the head 10. The support arm 50 may connect the head 10 to the pole 30. One side of the support arm 50 may be coupled to the upper end of the pole 30. The other side of the support arm 50 may be coupled to the rear side of the head 10. The other side of the support arm 50 may be coupled to the connector 40.

The connector 40 may be coupled to the rear surface of the head 10.

The base 20, the pole 30, the support arm 50, and the rotary connector 40 may be collectively referred to as stand 20, 30, 50 and 40. Consequently, the head 10 may be supported by the connector 40, the support arm 50, the pole 30, and the base 20, and may be spaced upwards from the ground surface.

A power cable CW may be connected to an external power source. The plug Cwa of the power cable CW may be connected to a concentric plug, and the jack of the power cable CW may be connected to the base 20. A battery (not shown) may be installed to the base 20, the pole 30 and/or the head 10, may be charged by power supplied through the power cable CW or discharged.

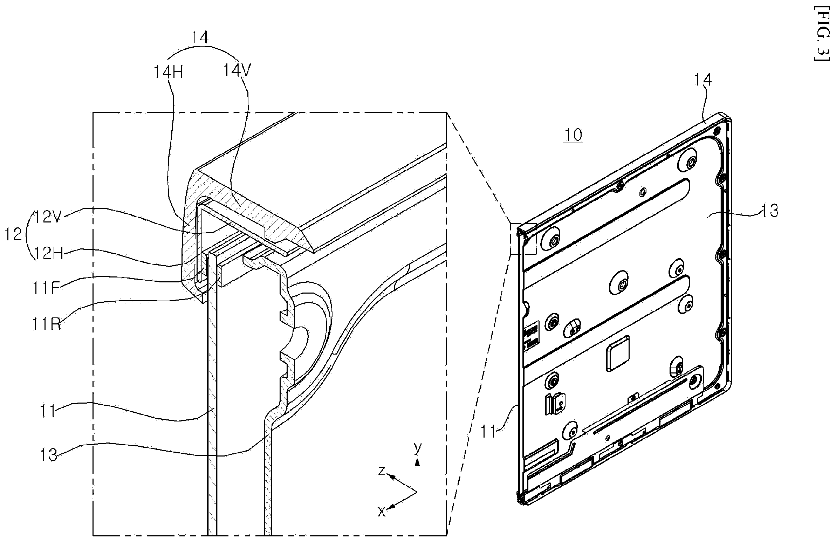

Referring to FIGs. 2 and 3, the head 10 may include a display panel 11, a middle cabinet 12, a frame 13, an end frame 14, and a back cover 15.

The display panel 11 may define the front surface of the head 10. For example, the display panel 11 may be an OLED panel or an LED panel. The display panel 11 may divide an image into a plurality of pixels, and may control the color, brightness and chrominance of each of the pixels, thereby outputting the image. The display panel 11 may be divided into an active area, in which an image is displayed, and an inactive area, in which an image is not displayed. The display panel 11 may generate light corresponding to red, green or blue in response to a control signal.

The middle cabinet 12 may extend along the periphery of the display panel 11. A horizontal portion 12H may be positioned in front of the display panel 11. A vertical portion 12V may intersect the horizontal portion 12H, and may cover the lateral side surface of the display panel 11. For example, the middle cabinet 12 may include a metal or plastic material. The middle cabinet 12 may be referred to as a side frame or a guide panel.

The frame 13 may be positioned behind the display panel 11. Electronic parts such as a PCB (Printed Circuit Board) may be coupled to the rear surface of the frame 13. For example, the frame 13 may include a metal material. The frame 13 may be referred to as a mount plate or a module cover.

The end frame 143 may define the periphery of the head 10. A horizontal portion 14H may be positioned in front of the horizontal portion 12H of the middle cabinet 12. A vertical portion 14V may cover the lateral side surface of the vertical portion 12V of the middle cabinet 12. For example, the end frame 14 may include a metal or plastic material.

The back cover 15 may define the rear surface of the head 10. The back cover 15 may cover the rear side of the frame 13, and may be coupled to the frame 13.

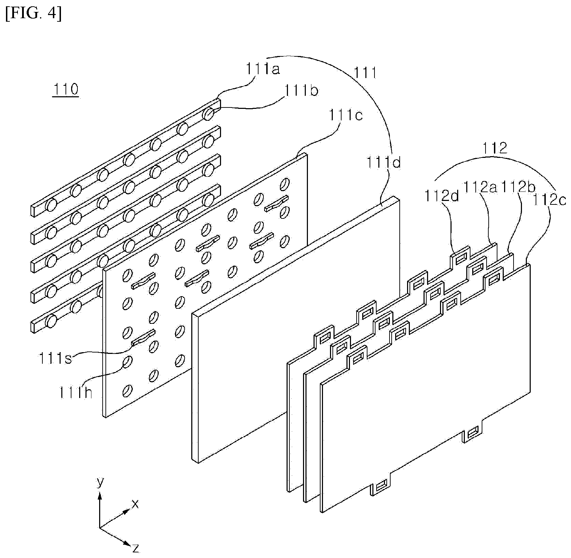

Referring to FIGs. 3 and 4, a backlight unit 110 may be positioned between the display panel 11 and the frame 13, and may be coupled to the frame 13. Here, the display panel 11 may be referred to as an LCD panel. The backlight unit 110 may include an optical layer 111 and an optical sheet 112. The optical layer 111 may include at least one of a substrate 111a, at least one light source 111b, a reflection sheet 111c, and a diffusion plate 111d.

The substrate 111a may be coupled to the front surface of the frame 13. The substrate 111a may have the shape of a plate, or may be composed of a plurality of straps which are spaced apart from each other in a vertical direction. The at least one light source 111b may be mounted on the substrate 111a. For example, the light source 111b may include an LED (Light Emitting Diode). An electrode pattern configured to connect an adaptor to the light source 111b may be formed on the substrate 111a. The reflection sheet 111c may be positioned in front of the substrate 111a. The reflection sheet 111c may have a hole 111h in which the light source 111b is positioned. The diffusion plate 111d may be positioned in front of the reflection sheet 111c. A spacer 111s may be disposed between the reflection sheet 111c and the diffusion plate 111d so as to support the rear surface of the diffusion plate 111d.

The optical sheet 112 may be positioned in front of the diffusion plate 111d. The rear surface of the optical sheet 112 may be in close contact with the diffusion plate 111d, and the front surface of the optical sheet 112 may be in close contact with or adjacent to the rear surface of the display panel 11. The optical sheet 112 may include at least one of a diffusion sheet or a prism sheet. A coupler 112d may be formed at at least one edge of the optical sheet 112.

Consequently, the light from the light source 111b may be supplied to the display panel 11 through the diffusion plate 111d and the optical sheet 112. Alternatively, the display panel 11 according to the present disclosure may be an OLED panel or another kind of panel which does not require the above-mentioned backlight unit 110.

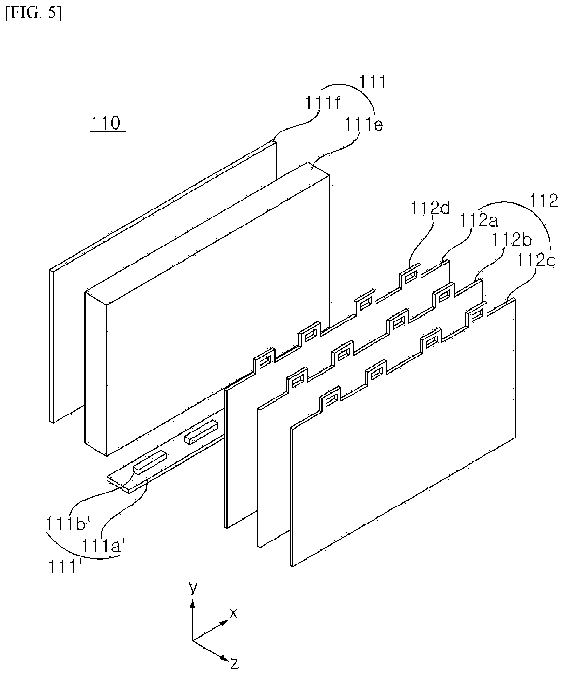

Referring to FIGs. 3 and 5, a backlight unit 110' may be positioned between the display panel 11 and the frame 13, and may be coupled to the frame 13. Here, the display panel 11 may be referred to as an LCD panel. The backlight unit 110' may include an optical layer 111' and the optical sheet 112. The optical layer 111' may include a substrate 111a', at least one light source 111b', a reflection sheet 111f, and a light guide plate 111e. The light guide plate 111e may be positioned between the frame 13 and the optical sheet 112, and may be supported by the frame 13.

The substrate 111a' may be adjacent to the periphery of the light guide plate 111e, and may be coupled to the frame 13. The at least one light source 111b' may be mounted on the substrate 111a'. For example, the light source 111b' may include an LED (Light Emitting Diode). An electrode pattern configured to connect the adaptor to the light source 111b' may be formed on the substrate 111a'. The reflection sheet 111f may be positioned between the frame 13 and the light guide plate 111e, and may be supported by the frame 13.

Consequently, the light from the light source 111b' may be supplied to the display panel 11 through the light guide plate 111e and the optical sheet 112. Alternatively, the display panel 11 according to the present disclosure may be an OLED panel or another kind of panel which does not require the above-mentioned backlight unit 110'.

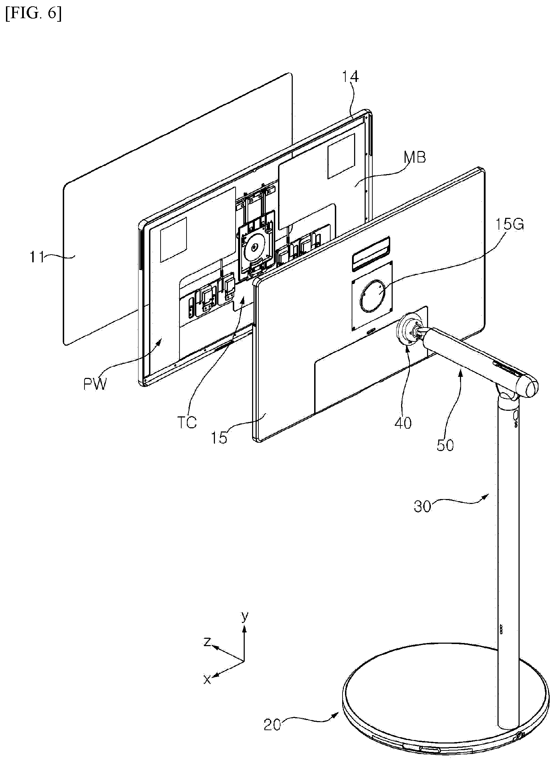

Referring to FIG. 6, a plurality of electronic parts PW, MB and TC are positioned between the display panel 11 and the back cover 15. For example, the plurality of electronic parts PW, MB and TC may be mounted on the front surface of the back cover 15. In another embodiment, the plurality of electronic parts PW, MB and TC may be mounted on the front surface or the rear surface of the frame 13 (see FIG. 3) positioned in front of the back cover 15. Examples of the plurality of electronic parts PW, MB and TC are as follows.

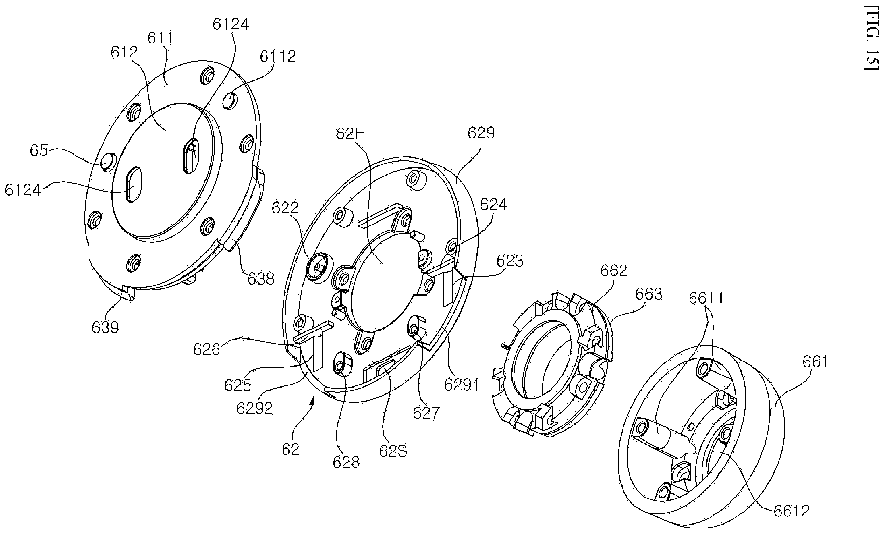

The power supply board PW may supply power to individual components of the display device. For example, the power supply board PW may supply power to the display panel 11, the main board MB, the timing controller board TC, and a battery B (see FIG. 15). The main board MB may control the display device. The timing controller board TC may be electrically connected to the display panel 11 via a cable (not shown), and may supply an image signal to the display panel 11.

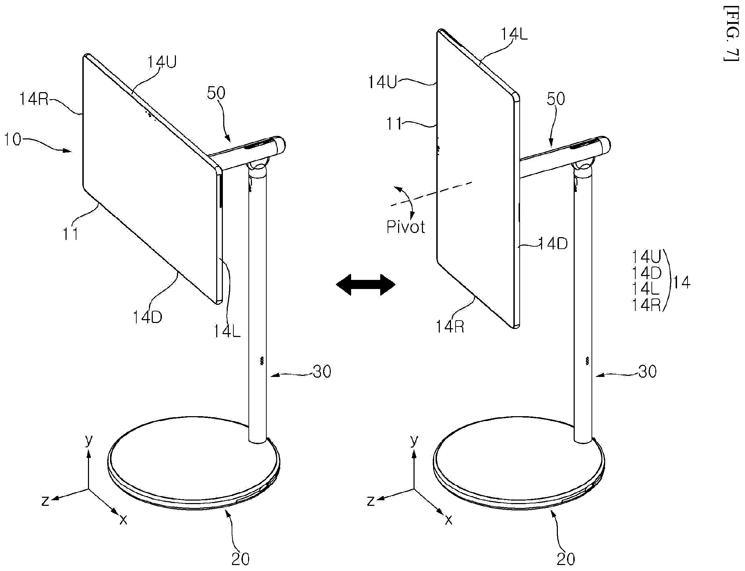

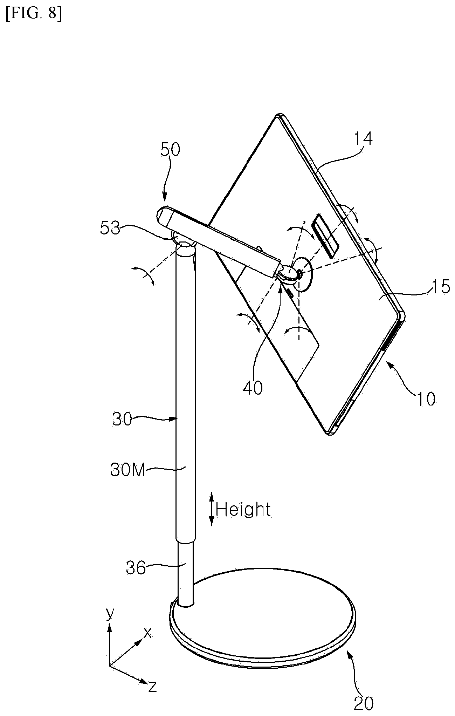

Referring to FIGs. 7 and 8 in conjunction with FIG. 6, the connector 40 may be a rotary connector 40. A user may pivot the head 10. Referring to the left figure of FIG. 7, the head 10 may be positioned in a horizontal mode. Referring to the right figure of FIG. 7, the head 10 may be positioned in a vertical mode. Referring to FIG. 8, a user may tilt or swivel the head 10. A user may adjust the height of the head 10 by controlling the length of the pole 30.

The display device 1 may include a mount 60. The mount 60 may be positioned between the head 10 and the connector 40. The mount 60 may be coupled to the connector 40. The mount 60 may surround a portion of the connector 40.

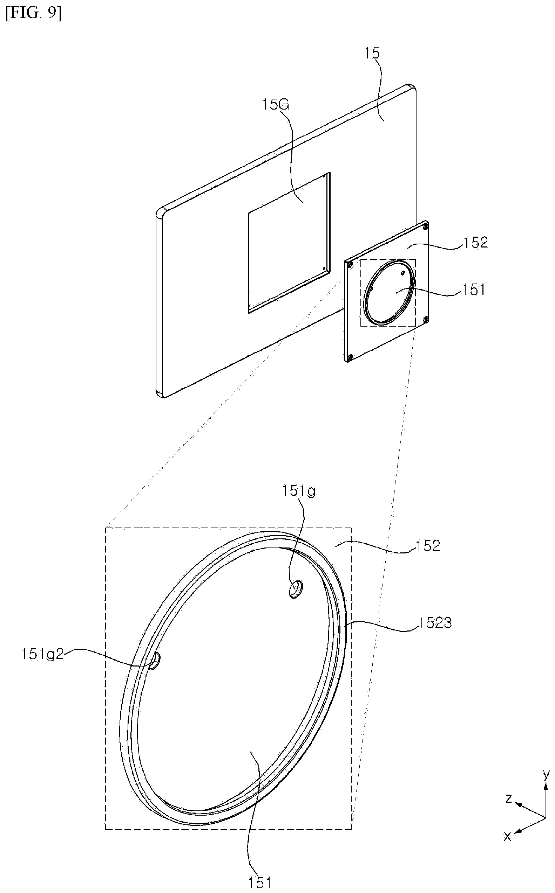

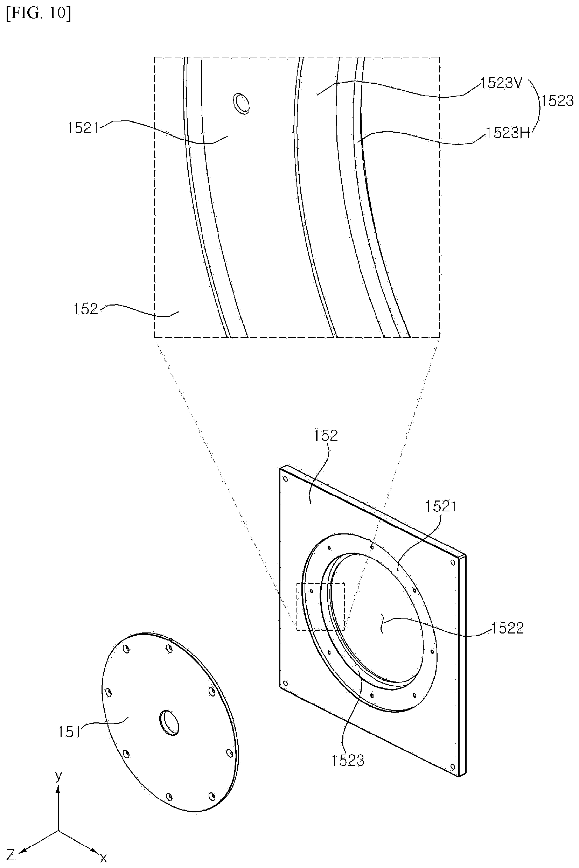

Referring to FIGs. 9 and 10, the head 10 may include a mount surface 15G. The mount surface 15G may be formed in the center of the rear surface of the back cover 15, and may be aligned with the mount 60.

The head 10 may include a coupling plate 152. The coupling plate 152 may be mounted on the mount surface 15G of the back cover 15. The mount groove 1521 in the coupling plate 152 may be formed by depressing the front surface of the coupling plate 152 rearwards. The hole 1522 in the coupling plate may be formed in the center of the coupling plate 152. The hole 1522 may be formed through the mount groove 1521 forward and backward.

The rib 1523 of the coupling plate 152 may project rearwards from the coupling plate 152. The rib 1523 may extend along the periphery of the hole 1522. The rib 1523 may define the boundary of the hole 1522. The rib 1523 may include a vertical portion 1523V and a horizontal portion 1523H which extends in a direction intersecting the vertical portion 1523V. The horizontal portion 1523H may extend in a direction toward the center of the hole 1522 from the end of the vertical portion 1523V. The horizontal portion 1523H and the vertical portion 1523V may define a coupling groove 1523V and 1523H.

The head 152 may include a base plate 151. The base plate 151 may be positioned between the back cover 151 and the coupling plate 152. The base plate 151 may be seated in the mount groove 1521 in the coupling plate 152, and may be coupled to the coupling plate 152. The base plate 152 may be exposed in a rearward direction of the back cover 15 through the hole 1522 in the coupling plate 152.

The base plate 151 may include a boss seating portion 151g1. The boss seating portion 151g1 may be a groove which is depressed forwards from the rear surface of the base plate 151.

The base plate 151 may include a protrusion seating portion 151g2. The protrusion seating portion 151g2 may be a groove which is depressed forwards from the rear surface of the base plate 151. The protrusion seating portion 151g2 and the boss seating portion 151g1 may be spaced apart from each other. The protrusion seating portion 151g2 and the boss seating portion 151g1 may overlap each other in a rightward-and-leftward direction.

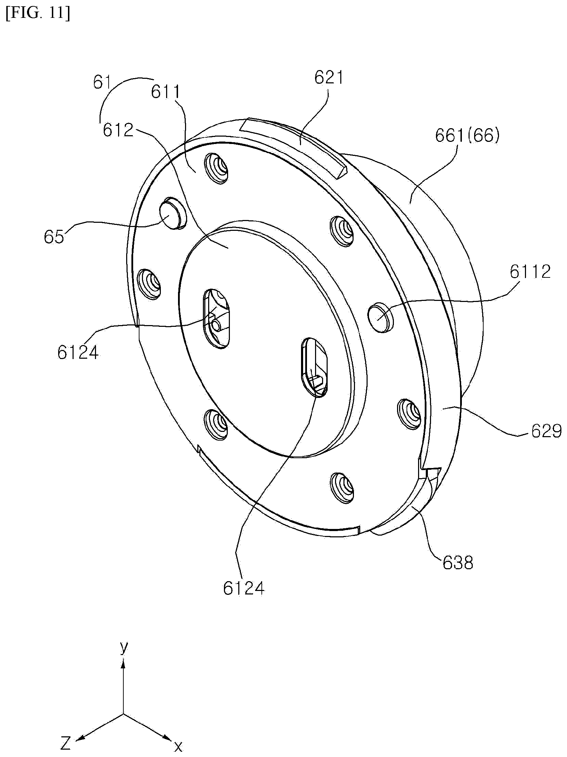

Referring to FIGs. 11, 12 and 13, the mount 60 may include a plate 61. The plate 61 may include a first plate 611 and a second plate 612 which projects forwards from the first plate 611. The first plate 611 and the second plate 612 may be formed integrally with each other.

The first plate 611 may include a boss hole 6111. The boss hole 6111 may be formed through the first plate 611 in a forward-and-backward direction, may be aligned with the boss seating portion 151g1 of the base plate 151.

The first plate 611 may include a protrusion 6112. The protrusion 6112 may project forwards from the first plate 611, and may be aligned with the protrusion seating portion 151g2 of the base plate 151.

The first plate 611 may include a first front groove 6113 and a second front groove 6114. The first front groove 6113 and the second front groove 6114 may be depressed forwards from the rear surface of the first plate 611. The first front groove 6113 and the second front groove 6114 may be spaced apart from each other, and may overlap each other in a rightward-and-leftward direction. The first front groove 6113 may be positioned to the left of the second plate 612, and the second front groove 6114 may be positioned to the right of the second plate 612.

The second plate 612 may be formed in the center of the first plate 611. The second plate 612 may be formed by pressing the rear surface of the first plate 611 forwards. The hole 6124 in the second plate 612 may be formed through the second plate 612 in a forward-and-backward direction. The hole 6124 may include a plurality of holes. For example, the plurality of holes 6124 may include two holes 6124 which are spaced apart from each other in a rightward-and-leftward direction.

The second plate 612 may include a magnet holder 6121. The magnet holder 6121 may project rearwards from the rear surface of the second plate 612. The magnet holder 6121 may receive a magnet M and surround the magnet M.

The head 10 may include a magnet (not shown) aligned with the magnet M fixed to the plate 61. The mount 60 disposed in the head 10 may provide magnetic coupling force. By virtue of the magnetic coupling force, the mount 60 may be attached to the head 10. Accordingly, a user can easily manipulate a knob 642 of a button 64, as described later.

The mount 60 may include a cover 62. The cover 62 may be positioned behind the plate 61, and may be coupled to the plate 61. A mount hole 62H may be formed in the center of the cover 62. A rib 62R of the cover 62 may project rearwards from the rear surface of the cover 62.

The mount 60 may include a slider 63. The slider 63 may be positioned between the plate 61 and the cover 62. The slider 63 may be movably coupled both to the plate 61 and to the cover 62. For example, the slider 63 may move in an upward-and-downward direction.

The slider 63 may extend in a circumferential direction of the plate 61, and may face the second plate 612. The slider 63 may be formed to have an arc shape. The slider 63 may include a first hole 631 and a second hole 632. Each of the first hole 631 and the second hole 632 may be a long hole which is elongated in an upward-and-downward direction. The first hole 631 and the second hole 632 may be spaced apart from each other in a rightward-and-leftward direction.

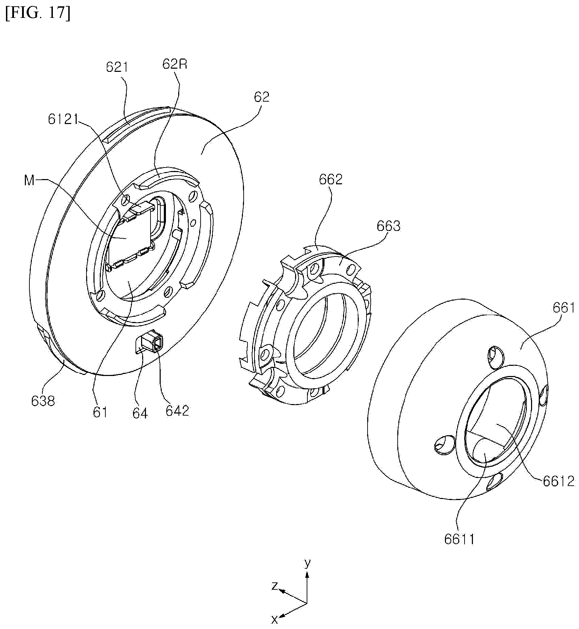

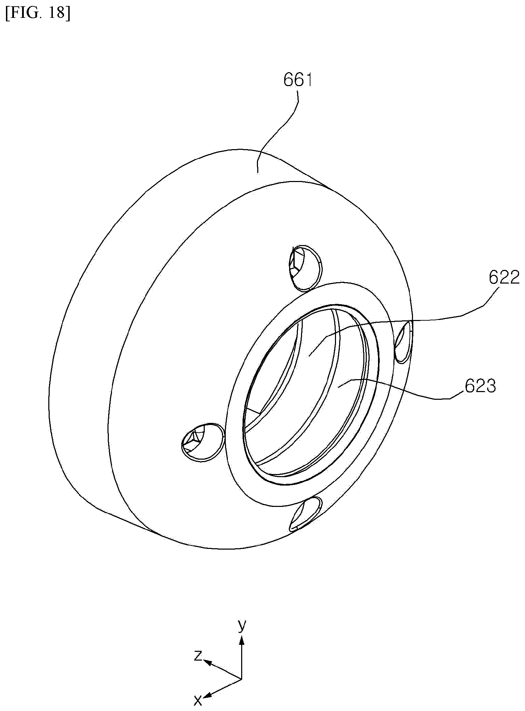

The slider 63 may include a pin hole 633. The pin hole 633 may be positioned between the first hole 631 and the second hole 632. The pin hole 633 may include a first path P1 (see FIGs. 17 and 18) and a second path P2 (see FIGs. 17 and 18) which extend in directions which intersect a horizontal line HL (see FIGs. 17 and 18) which extends in a rightward-and-leftward direction. The first path P1 (see FIGs. 17 and 18) may extend in an inclined direction relative to the horizontal line HL (see FIGs. 17 and 18). The second path P2 (see FIGs. 17 and 18) may extend in an inclined direction intersecting the first path P1 (see FIGs. 17 and 18) and orthogonal to the horizontal line HL (see FIGs. 17 and 18). The first and second paths P1 and P2 (see FIGs. 17 and 18) may define an acute angle therebetween.

The slider 63 may include a first spring 634 and a second spring 636. The first spring 634 and the second spring 636 may be spaced apart from each other in a rightward-and-leftward direction. The first spring 634 may be adjacent to the first hole 631, and the second spring 636 may be adjacent to the second hole 632. The first spring 634 and the second spring 636 may be compressed and restored in an upward-and-downward direction. Accordingly, the slider may be moved upwards and downwards by virtue of the first and second springs 634 and 636.

The slider 63 may include a first holder 635 and a second holder 637. The first holder 635 and the second holder 637 may be formed by pressing a portion of the slider 62 forwards. The first spring 634 may be positioned in the first holder 635, and the second spring 636 may be positioned in the second holder 637.

The slider 63 may include a first hook 638 and a second hook 639. The first hook 638 and the second hook 639 may project radially from the outer peripheral surface of the slider 63. The first hook 638 may be adjacent to the first hole 631, and the second hook 639 may be adjacent to the second hole 632. The first hook 638 may be positioned to the left of the slider 63, and the second hook 639 may be positioned to the right of the slider 63. The first hook 638 and the second hook 639 may be formed integrally with the slider body 63, and may be moved along with the slider 63.

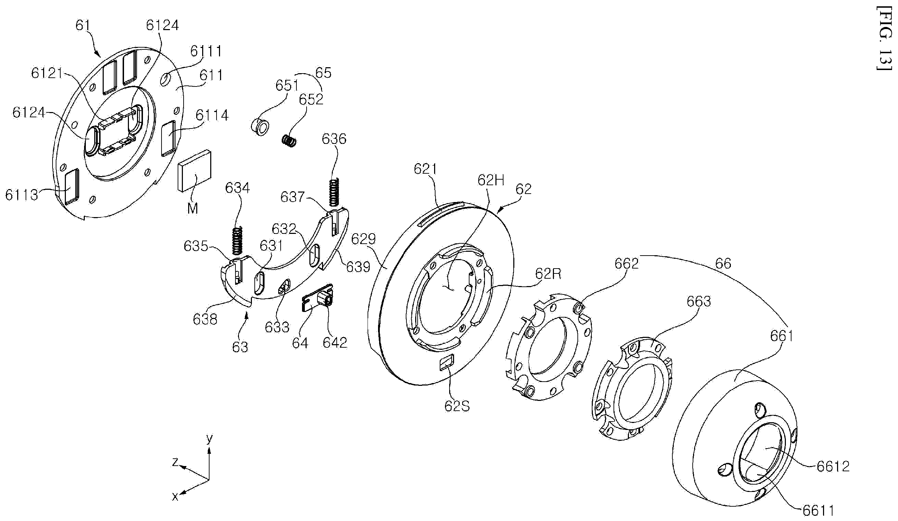

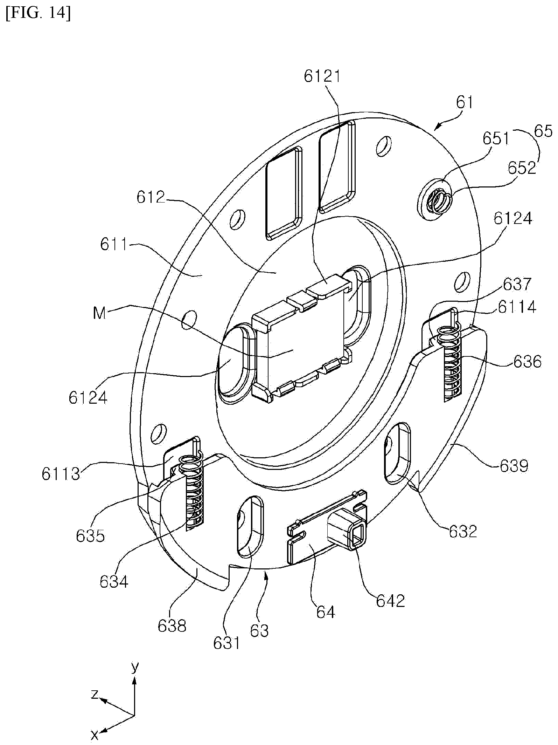

Referring to FIGs. 14 in conjunction with FIG. 13, the slider 63 may be positioned below the first plate 611. The first spring 634 and the first holder 635 may be positioned in the first front groove 6113 in the first plate 611. The second spring 635 and the second holder 636 may be positioned in the second front groove 6114 in the first plate 611. The magnet M may be supported by the magnet holder 6121 of the first plate 611.

The mount 60 may include a boss 64. The boss 63 may include a boss cap 651 and a tension spring 652 disposed in the boss cap 651. The boss 63 may be inserted into the boss hole 6111 in the first plate 611, and may project in a forward direction of the first plate 611. When the mount 60 is coupled to the head 10, the boss 65 may come into contact with the boss seating portion 151g1 of the back cover 15. A user may determine whether the head 10 and the mount 60 are coupled to each other depending on contact between the boss 65 and the boss seating portion 151g1.

Referring to FIG. 15 in conjunction with FIG. 13, the cover 62 may include a side portion 629. The side portion 629 may extend along the periphery of the cover 62 so as to form the lateral side surface of the cover 62. Cutout portions 6291 and 6292 may be formed in the side portion 629. The cutout portions 6291 and 6292 may be formed by cutting portions of the side portion 629. The cutout portions 6291 and 6292 may include a plurality of cutout portions. The plurality of cutout portions 6291 and 6292 may include a first cutout portion 6291 and a second cutout portion 6292. The first cutout portion 6291 may be aligned with the first hook 638, and may receive the first hook 638 therein. The second cutout portion 6292 may be aligned with the second hook 639, and may receive the second hook 639 therein. A top hook 621 may project from the side portion 629 in a radial direction of the cover 62. The top hook 621, the first cutout portion 6291, and the second cutout portion 6292 may be spaced apart from one another in a circumferential direction of the cover 62.

The cover 62 may include a boss coupler 622. The boss 65 may be coupled to the boss coupler 622. The boss coupler 622 may include a body (no reference numeral) and a protrusion (no reference numeral). The body (no reference numeral) of the boss coupler 622 may project forwards from the cover 62, and may be formed to have the shape of a ring. The rear end of the boss cap 651 may come into contact with the body of the boss coupler 622, and the tension spring 652 may be positioned in the body. The protrusion of the boss coupler 622 may project forwards from the cover 62, and may be surrounded by the ring-shaped body. The protrusion of the boss coupler 622 may be inserted into the tension spring 652 of the boss 65 so as to support the tension spring 652. The boss coupler 622 may be aligned with the boss hole 6111 in the plate 61 and the boss seating portion 151g1 of the back cover 15.

The cover 62 may include a first rear groove 623. The first rear groove 623 may be depressed rearwards from the front surface of the cover 62. The first rear groove 623 may extend in an upward-and-downward direction. The first rear groove 623 may be aligned with the first front groove 6113 in the plate 151.

The cover 62 may include a first wall 624. The first wall 624 may project forwards from the front surface of the cover 62. The first wall 624 may be positioned at the upper end of the first rear groove 623. The first wall 624 may extend in a direction intersecting a direction in which the first rear groove 623 extends. The first wall 624 may extend in a rightward-and-leftward direction.

The cover 62 may include a second rear groove 625. The second rear groove 625 may be depressed rearwards from the front surface of the cover 62. The second rear groove 625 may extend in an upward-and-downward direction. The second rear groove 625 may be aligned with the second front groove 6114 in the plate 151. The second rear groove 625 may be spaced apart from the first rear groove 624 in a rightward-and-leftward direction. The first rear groove 624 may be positioned to the left of the mount hole 62H, and the second rear groove 625 may be positioned to the right of the mount hole 62H.

The cover 62 may include a second wall 626. The second wall 626 may project forwards from the front surface of the cover 62. The second wall 626 may be positioned at the upper end of the second rear groove 625. The second wall 626 may extend in a direction intersecting a direction in which the second rear groove 625 extends. The second wall 626 may extend in a rightward-and-leftward direction.

The cover 62 may include a first stopper 627. The first stopper 627 may project from the front surface of the cover 62. The first stopper 627 may be aligned with the first hole 631 in the slider 63. The first stopper 627 may be positioned below the mount hole 62H.

The cover 62 may include a second stopper 628. The second stopper 628 may project forwards from the from the front surface of the cover 62. The second stopper 628 may be aligned with the second hole 632. The second stopper 628 may be positioned below the mount hole 62H. The first stopper 627 and the second stopper 628 may be positioned below the mount hole 62H, and may be spaced apart from each other in a rightward-and-leftward direction. The first stopper 627 may be positioned to the left of the second stopper 628, and the second stopper 628 may be positioned to the right of the first stopper 627. The cover 62 may include the second stopper 628.

The cover 62 may include a slot 62S. The slot 62S may be formed through the cover 61 in a forward-and-backward direction, and may be a long hole which extends in a rightward-and-leftward direction. The slot 62S may be aligned with the pin hole 633.

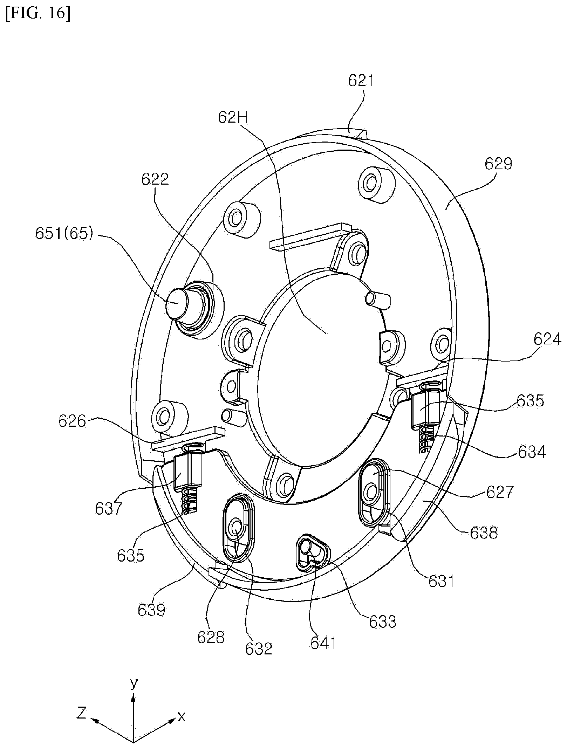

The mount 60 may include the button 64. The button 64 may be positioned between the slider 63 and the cover 62. The button 64 may include the pin 641 (see FIG. 16) which projects forwards from the button 64, and the knob 642 which projects rearwards from the button 64. The pin 641 (see FIG. 16) may be inserted into the pin hole 633 in the slider 63. The knob 642 may be inserted into the slot 62S in the cover 62, and may project in a backward direction of the cover 62. The width of the knob 642 in a rightward-and-leftward direction may be smaller than the width of the slot 62S in a rightward-and-leftward direction. Consequently, the knob 642 may be movable in the slot 62S in a rightward-and-leftward direction.

Referring to FIG. 16 in conjunction with FIG. 15, the first rear groove 623 may be aligned with the first front groove 6113. The first spring 634 may be positioned between the first rear groove 623 and the first front groove 6113. The first spring 634 and the first holder 635 may be positioned between the first rear groove 623 and the first front groove 6113. The upper end of the first spring 634 may contact the first wall 624. When the slider 63 moves upwards, the first spring 634 may be compressed by the first wall 624.

The second rear groove 624 may be aligned with the second front groove 6114. The second spring 636 may be positioned between the second rear groove 624 and the second front groove 6114. The second spring 636 and the second holder 637 may be positioned between the second rear groove 624 and the second front groove 6114. The upper end of the second spring 636 may contact the second wall 626. When the slider 63 moves upwards, the second spring 636 may be compressed by the second wall 626.

The first stopper 627 may be aligned with the first hole 631 in the slider 63, and may be inserted into the first hole 631. The width of the fist stopper 627 in an upward-and-downward direction may be smaller than the width of the first hole 631 in an upward-and-downward direction. Consequently, the first stopper 627 may limit movement of the slider 63 in an upward-and-downward direction.

The second stopper 628 may be aligned with the second hole 632 in the slider 63, and may be inserted into the second hole 632. The width of the second stopper 628 in an upward-and-downward direction may be smaller than the width of the second hole 632 in an upward-and-downward direction. Consequently, the second stopper 628 may limit movement of the slider 63 in an upward-and-downward direction.

Referring to FIGs. 17, 18 and 19, the mount 60 may include a sleeve 66. The sleeve 66 may be positioned behind the cover 62, and may be coupled to the cover 62.

The sleeve 66 may include a sleeve cover 661. The sleeve cover 661 may be open at the front surface thereof, and may be coupled to the mount hole 62H in the cover 62. The rib 62R of the cover 62 may extend along the periphery of the sleeve cover 661. A hole 6621 may be formed in the rear surface of the sleeve cover 661. The connector 40 (see FIG. 2) may be inserted into and coupled to the hole 6621 in the sleeve cover 661. At least a portion of a rotary body (not shown) of the connector 40 (see FIG. 2) may be inserted into the sleeve cover 661.

The sleeve cover 661 may include a cover coupler 6611. The cover coupler 6611 may project inwards from the inner surface of the sleeve cover 661. The cover coupler 6611 may include a plurality of cover couplers. The plurality of cover couplers 6611 may be spaced apart from each other in a circumferential direction of the sleeve 66. A fastening element such as a screw may be fastened to the cover coupler 6611 through the cover 62. Consequently, the cover 62 may be coupled to the sleeve 66.

The sleeve 66 may include inner rings 662 and 663. The inner rings 662 and 663 may be inserted into the sleeve cover 661. The inner rings 662 and 663 may include a first inner ring 662 and a second inner ring 663 positioned behind the first inner ring 662. The first inner ring 662 and the second inner ring 663 may be coupled to each other by means of a fastening element such as a screw. The central holes in the first and second inner rings 662 and 663 may be aligned with the hole 6612 in the cover 661. The diameter of the central hole in the first inner ring 662 may be larger than the diameter of the central hole in the second inner ring 663. Consequently, the diameters of the central holes in the inner rings 662 and 663 may be reduced rearwards.

The rotary body (not shown) of the connector 40 (see FIG. 2) may be rotatably inserted into the central holes in the inner rings 662 and 663.

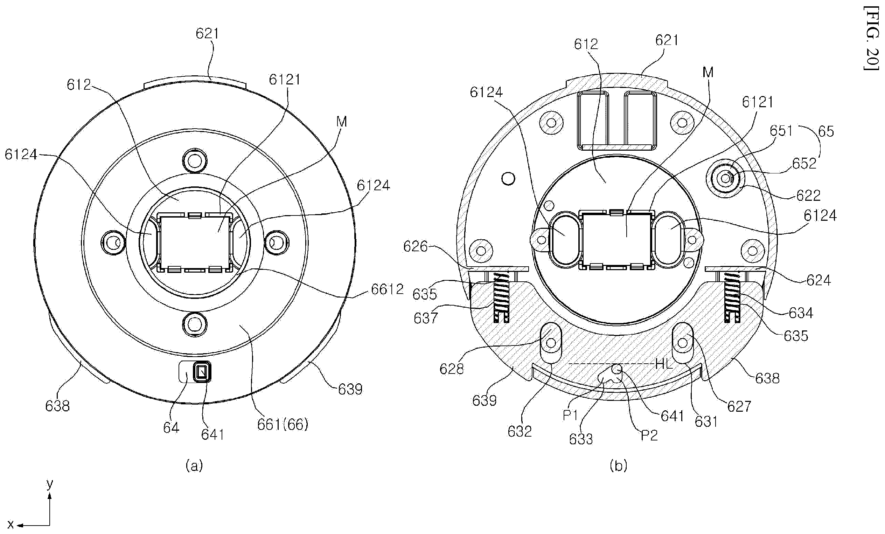

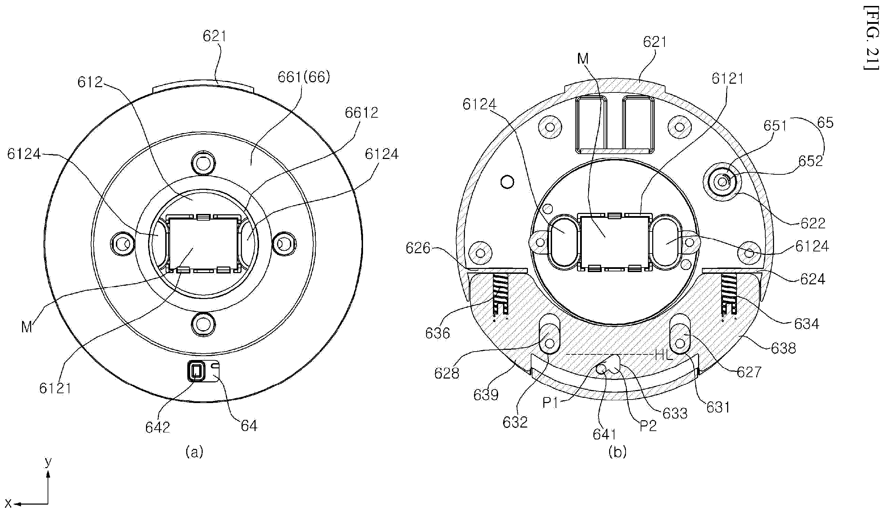

Referring to FIGs. 20 and 21, the mount 60 may be detachably coupled to the head 10 (see FIG. 6). The mount 60 may be detachably coupled to the coupling plate 152 (see FIGs. 6 and 9) of the back cover 15. FIG. 20 illustrates a latched state of the mount 60. The latched state may be referred to as a locked state or a coupled state. FIG. 21 illustrates an unlatched state of the mount 60. The unlatched state may be referred to as an unlocked state or an uncoupled state.

The top hook 621 may catch on the coupling groove (see FIG. 10) of the coupling plate 152. The mount 60 may be converted into an unlatched state or a latched state by moving the knob 642 rightwards or leftwards in the state in which the top hook 621 is inserted into the coupling groove (see FIG. 10) of the coupling plate 152. A user is able to easily perform attachment and detachment of the mount 60 with respect to the head 10 by moving the knob 642 rightwards or leftwards.

The knob 642 may be movable in the slot 62S (see FIG. 15) rightwards and leftwards. When the knob 642 is moved in the slot 62S (see FIG. 15), the pin 641 may move within the pin hole 633.

Referring to FIG. 21, when the knob 642 is moved leftwards, the pin 641 may be moved along the first path P1 from the inflection point between the first path P1 and the second path P2, and the slider 63 may be raised relative to the plate 61 and the cover 62 which are coupled to each other. Here, when the lower ends of the first and second stoppers 627 and 628 come into contact with the first and second holes 631 and 632 in the slider 63, movement of the slider 63 may be restricted. When the movement of the slider 63 is restricted by the stoppers 627 and 628, the slider 63 may be raised while compressing the first and second springs 634 and 635. As the slider 63 is moved upwards, the first and second hooks 638 and 639 may be positioned between the plate 61 and the cover 62 (a hidden state), and the mount 60 and the back cover 15 may be unlatched, thereby enabling a user to remove the mount 60 from the head 10.

Referring to FIG. 20, when the knob 642 is moved rightwards, the pin 641 may be moved toward the inflection point between the first path P1 and the second path P2 along the first path P1. At this time, the slider 62 may be moved downwards by the restoring force of the first and second springs 634 and 635. Here, when the upper ends of the first and second stoppers 627 and 628 catch on the first and second holes 631 and 632, movement of the slider 63 may be restricted. As the slider 63 is moved downwards, the first and second hooks 638 and 639 may project in a radial direction of the mount 60 through the first and second cutout portions 6291 and 6292. At this time, the first and second hooks may be inserted into the coupling groove in the coupling plate 152, and the mount 60 and the back cover 15 may be converted into a latched state, thereby allowing a user to couple the mount 60 to the head 10.

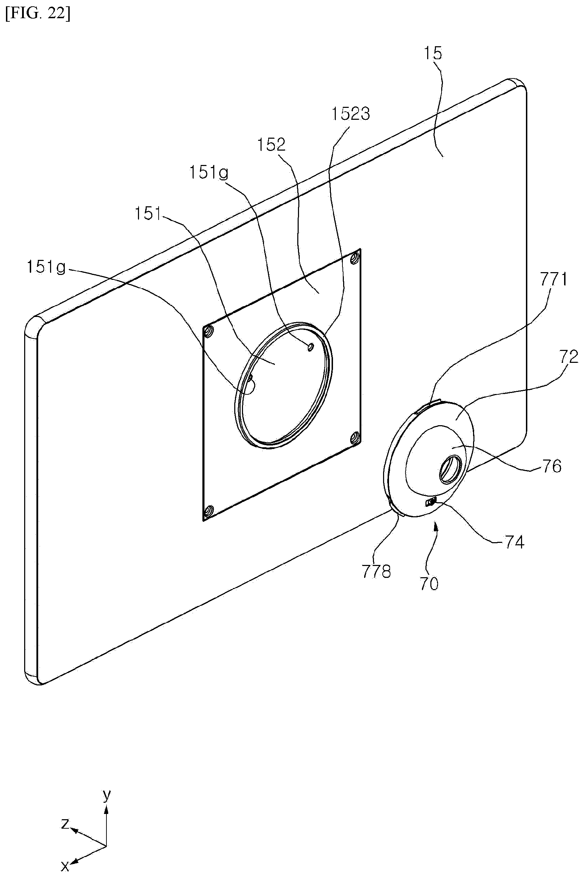

Referring to FIG. 22, a mount 70 may be detachably attached to the head 10. The mount 70 may be detachably attached to the back cover 15. The head 10 may include the coupling plate 152 and the base plate 151, and the mount 70 may be coupled to the coupling plate 152 or may be separated from the coupling plate 152. The coupling plate 152 may include the rib 1523. The rib 1523 may project rearwards from the coupling plate 152. The rib 1523 may extend along the periphery of the hole 1522 (see FIG. 10). The rib 1523 may define the boundary of the hole 1522 (see FIG. 10). The rib 1523 may include a vertical portion 1523V and a horizontal portion 1523H which extends in a direction intersecting the vertical portion 1523V (see FIG. 10). The horizontal portion 1523H may extend toward the center of the hole 1522 from the end of the vertical portion 1523V. The horizontal portion 1523H and the vertical portion 1523V may define the coupling groove (no reference numeral).

The base plate 151 may be positioned between the back cover 151 and the coupling plate 152. The base plate 151 may be seated in the mount groove 1521 (see FIG. 10) in the coupling plate 152 and may thus be coupled to the coupling plate 152. The base plate 152 may be exposed in a rearward direction of the back cover 15 through the hole 1522 (see FIG. 10) in the coupling plate 152.

The base plate 151 may include the boss seating portion 151g. The boss seating portion 151g may be a groove depressed forwards from the rear surface of the base plate 151. The boss seating portion 151g may include a plurality of boss seating portions. For example, the plurality of boss seating portions 151g may include two boss seating portions 151g which are spaced apart from each other in a rightward-and-leftward direction.

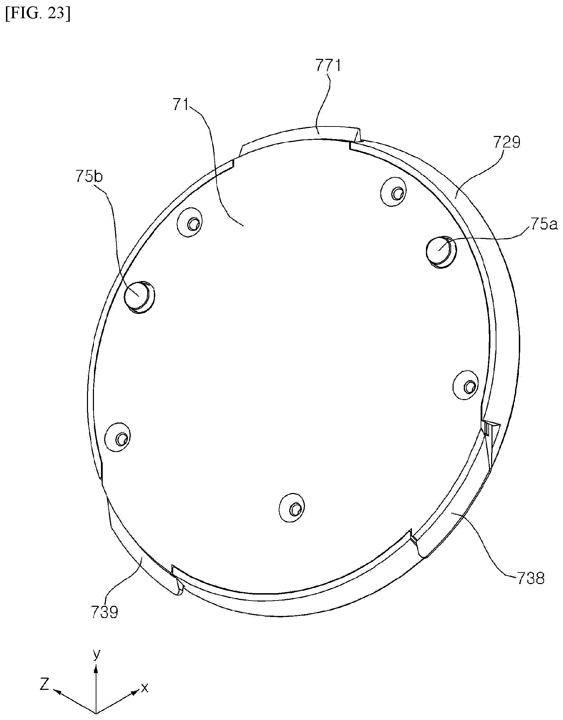

FIGs. 23, 24 and 25, the mount 70 may include a plate 71. The plate 71 may face the base plate 151, and may be in contact with the base plate 151.

The plate 72 may include boss holes 7111 and 7112. The boss holes 7111 and 7112 may be formed through the plate 72 in a forward-and-backward direction. The boss holes 7111 and 7112 may be aligned with the boss seating portion 151g of the base plate 151. The boss holes 7111 and 7112 may include a plurality of boss holes. The plurality of boss holes 7111 and 7112 may include a first boss hole 7111 and a second boss hole 7112 which are spaced apart from each other.

The plate 72 may include an upper groove 7113. The upper groove 7113 may be depressed forwards from the rear surface of the plate 72. The upper groove 7113 may be positioned adjacent to the upper end of the plate 71. The upper groove 7113 may have the shape of a groove which extends in an upward-and-downward direction. For example, the upper groove 7113 may include two upper grooves 7113.

The plate 72 may include a first front groove 7114 and a second front groove 7115. The first front groove 7114 and the second front groove 7115 may be depressed forwards from the rear surface of the plate 72. Each of the first front groove 7114 and the second front groove 7115 may be a groove which extends in an upward-and-downward direction. The first front groove 7114 and the second front groove 7115 may be spaced apart from each other in a rightward-and-leftward direction. The first front groove 7114 may be positioned to the left of the second front groove 7115.

The mount 70 may include a cover 72. The cover 72 may be positioned behind the plate 71. The cover 72 may be coupled to the plate 71. A mount hole (no reference numeral) may be formed in the center of the cover 72. A sleeve 76 may be coupled to the mount hole (no reference numeral) in the cover 72. The cover 72 may be formed integrally with the sleeve 76. A hole (no reference numeral) may be formed in the rear surface of the sleeve 76. The connector 40 (see FIG. 2) may be coupled to the sleeve 76. A portion of the connector 40 (see FIG. 2) may be inserted into the sleeve 76 through the hole (no reference numeral) in the sleeve 76.

The mount 70 may include a first slider 73. The first slider 73 may be positioned between the plate 71 and the cover 72. The first slider 73 may be disposed between the plate 61 and the cover 62, and may be movably coupled thereto. The first slider 73 may be movable in an upward-and-downward direction.

The first slider 73 may extend in a circumferential direction of the plate 71, and may be formed in an arc shape. The first slider 73 may be positioned below the plate 71. The first slider 73 may include a first hole 731 and a second hole 732. Each of the first hole 731 and the second hole 732 may be a long hole which extends in an upward-and-downward direction. The first hole 731 and the second hole 732 may be spaced apart from each other in a rightward-and-leftward direction.

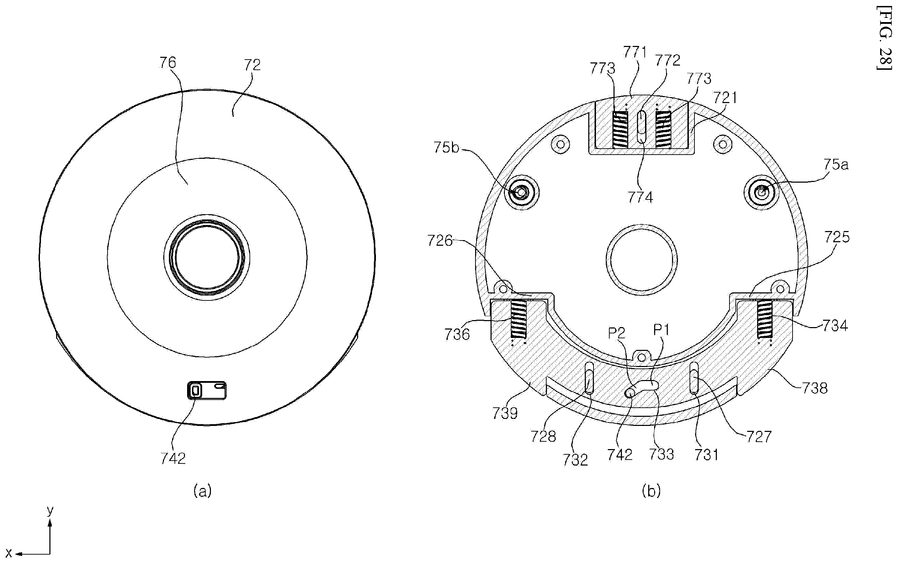

The first slider 73 may include a pin hole 733. The pin hole 733 may be positioned between the first hole 731 and the second hole 732. The pin hole 733 may include a first path P1 (see FIG. 28) which extends in a direction intersecting a horizontal line HL (see FIG. 28) which extends in a rightward-and-leftward direction. The pin hole 733 may include a second path P2 (see FIG. 28) which is connected to the first path P1 and extends parallel to the horizontal line HL (see FIG. 28). The first path P1 (see FIG. 28) may extend in a direction inclined relative to the horizontal line HL (see FIG. 28). The second path P2 (see FIG. 28) may extend in a direction intersecting the first path P1 (see FIG. 28). The first and second paths P1 and P2 (see FIG. 28) may define an obtuse angle therebetween.

The first slider 73 may include a first spring 734 and a second spring 736. The first spring 734 and the second spring 736 may be spaced apart from each other in a rightward-and-leftward direction. The first spring 734 may be adjacent to the first hole 731, and the second spring 736 may be adjacent to the second hole 732. The first spring 734 and the second spring 736 may be compressed and restored in an upward-and-downward direction. Consequently, the first slider 73 may be moved by the springs 734 and 736 in an upward-and-downward direction.

The first slider 73 may include a first holder 735 and a second holder 737. The first holder 735 and the second holder 737 may be formed by pressing portions of the first slider 73 forwards. The first spring 734 may be positioned in the first holder 735, and the second spring 736 may be positioned in the second spring 736.

The first slider 73 may include a first hook 738 and a second hook 739. The first hook 738 and the second hook 739 may project radially from the outer peripheral surface of the slider 73. The first hook 738 may be positioned closer to the first hole 731 than the second hook 739, and the second hook 739 may be positioned closer to the second hole 732 than the first hook 738. The first hook 738 may be positioned to the left of the first slider 73, and the second hook 739 may be positioned to the right of the first slider 73. The first and second hooks 738 and 739 may formed integrally with the first slider 73, and may be movable together with the first slider 73.

The mount 70 may include a second slider 77. The second slider 77 may be positioned at an upper portion of the plate 71. The second slider 77 may be spaced apart from the first slider 73, and may be operated independently of the first slider 73.

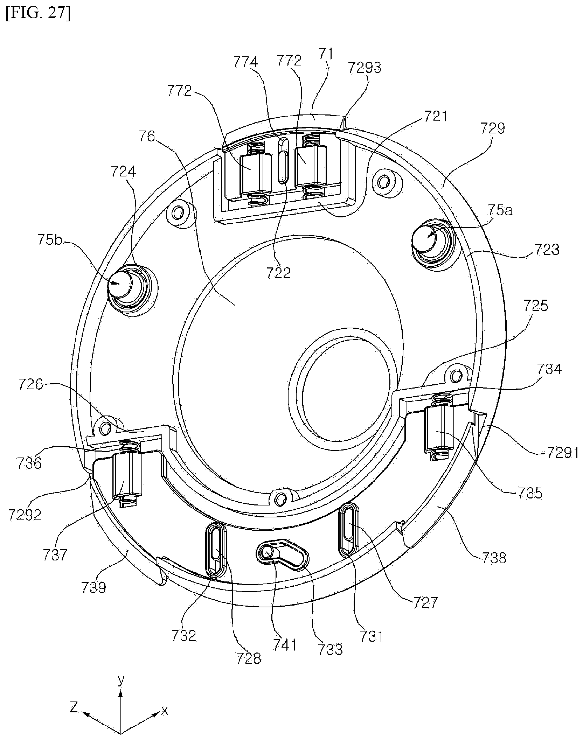

The second slider 77 may include a top hook 771 which projects radially from the second slider 77. The top hook 771, the first hook 738, and the second hook 739 may be spaced apart from one another in a circumferential direction of the plate 71 and/or the cover 72. The second slider 77 may include a top holder 772 (see FIG. 27). The top holder 77 (see FIG. 27) may be formed by pressing the rear surface of the second slider 77 forwards. For example, the top holder 772 may include two top holders. The second slider 77 may include a top spring 773. The top spring 773 may be coupled to the top holder 772 (see FIG. 27). For example, the top spring 773 may include two top springs. The top spring 773 may be compressed and restored in an upward-and-downward direction. Consequently, the second slider 77 may be movable in an upward-and-downward direction by the top spring 773.

The second slider 77 may include a third hole 774. The third hole 774 may be positioned between the two top holders 772. The third hole 774 may be a long hole which extends in an upward-and-downward direction.

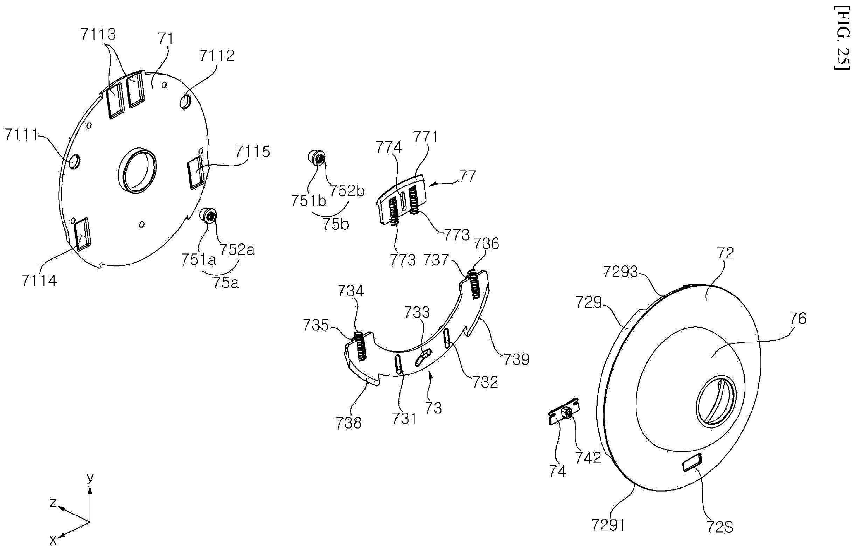

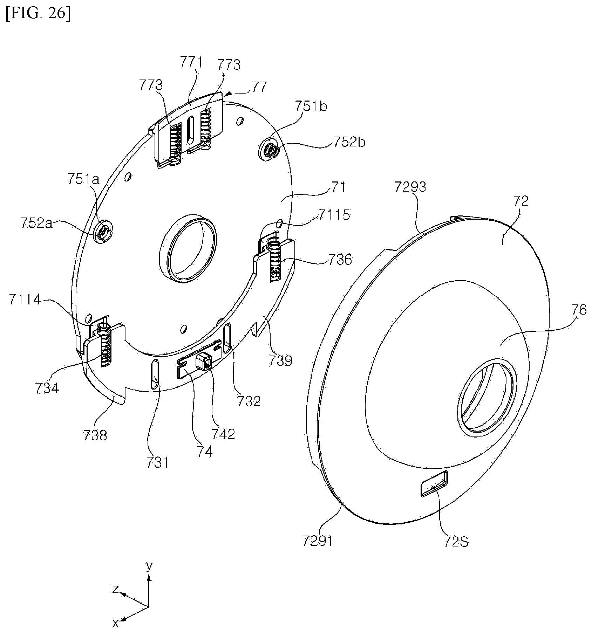

Referring to FIG. 26 in conjunction with FIG. 25, the first slider 73 may be positioned at a lower portion of the plate 71, and the second slider 77 may be positioned at an upper portion of the plate 71. The first spring 734 and the first holder 735 may be positioned in the first front groove 7113 in the plate 71. The second spring 735 and the second holder 736 may be positioned in the second front groove 7114 in the plate 71. The top spring 773 and the top holder 772 may be positioned in a top groove 7113.

The mount 70 may include bosses 75a and 75b. The bosses 75a and 75b may include boss caps 751a and 752b and tension springs 751b and 752b inserted into the boss caps 751a and 752a. The bosses 75a and 75b may include a first boss 75a inserted into the first boss hole 7111 in the plate 71, and a second boss 75b inserted into the second boss hole 7112 in the plate 71. The first boss 75a may be inserted into the first boss hole 7111, and may project forwards from the plate 71. The second boss 72b may be inserted into the second boss hole 7112, and may project forwards from the plate 71. When the mount 70 is coupled to the head 10, the bosses 75a and 75b may come into contact with the boss seating portion 151g of the back cover 15. A user may determine whether the head 10 is coupled to the mount 70 depending on contact between the bosses 75a and 75b and the boss seating portion 151g.

Referring to FIG. 27 in conjunction with FIG. 25, the cover 72 may include a side portion 729. The side portion 729 may extend along the periphery of the cover 72 to form the side surface of the cover 72. A plurality of cutout portions 7291, 7291 and 7293 may be formed in the side portion 729. The cutout portions 7291, 7291 and 7293 may be formed by cutting portions of the side portion 729. The cutout portions 7291, 7291 and 7293 may include a first cutout portion 7291, a second cutout portion 7292 and a third cutout portion 7293 which are spaced apart from one another in a circumferential direction of the cover 72. The first cutout portion 7291 may be aligned with the first hook 738, and may receive the first hook 738 therein. The second cutout portion 7292 may be aligned with the second hook 739, and may receive the second hook 739 therein. The third cutout portion 7393 may be aligned with the top hook 771, and may receive the top hook 771 therein.

The cover 72 may include boss couplers 723 and 724. The boss couplers 723 and 724 may include a first boss coupler 723 and a second boss coupler 724. The first boss 75a may be coupled to the first boss coupler 723, and the first boss 75b may be coupled to the second boss coupler 724.

The cover 72 may include a top wall 721. The top wall 721 may project forwards from the front surface of the cover 72. The top wall 721 may extend in a direction intersecting a direction in which the second slider 77 moves. For example, the top wall 721 may extend in a rightward-and-leftward direction. The upper end of the top spring 773 may come into contact with the top hook 771 and may be fixed thereto, and the lower end of the top spring 773 may come into contact with the top wall 721 and may be fixed thereto.

The cover 72 may include a top stopper 722. The top stopper 722 may project forwards from the front surface of the cover 72. The top stopper 722 may be extend in an upward-and-downward direction. The top stopper 722 may be inserted into the third hole 774 in the second slider 77. The length of the top stopper 722 in an upward-and-downward direction may be less than the width of the third hole 774 in the second slider 77 in an upward-and-downward direction.

The cover 72 may include a first wall 725 and a second wall 726. The first wall 725 and the second wall 726 may project forwards from the front surface of the cover 72. The upper end of the first spring 734 may be fixed to the first wall 725. The upper end of the second spring 736 may be fixed to the second wall 726. The first wall 725 and the second wall 726 may extend in a direction intersecting a direction in which the first slider 73 moves. For example, the first wall 725 and the second wall 726 may extend in a rightward-and-leftward direction.

The cover 72 may include a first stopper 727. The first stopper 727 may project forwards from the front surface of the cover 72. The first stopper 727 may be aligned with the first hole 731 in the first slider 73, and may be inserted into the second hole 731. The first stopper 727 may extend in an upward-and-downward direction. The length of the first stopper 727 in an upward-and-downward direction may be less than the width of the first hole 731 in an upward-and-downward direction. The cover 72 may include a second stopper 728. The second stopper 728 may project forwards from the front surface of the cover 72. The second stopper 728 may be aligned with the second hole 732 in the first slider 73, and may be inserted into the second hole 732. The second stopper 728 may extend in an upward-and-downward direction. The length of the second stopper 728 in an upward-and-downward direction may be less than the width of the second hole 732 in an upward-and-downward direction.

The cover 72 may include a slot 72S. The slot 72S may be formed through the cover 72 in a forward-and-backward direction, and may be a long hole which is elongated in a rightward-and-leftward direction. The slot 72S may be aligned with the pin hole 733 in the first slider 73.

The mount 70 may include a button 74. The button 74 may be positioned between the first slider 74 and the cover 72. The button 74 may include a pin 741, which projects forwards from the button 74, and a knob 742, which projects rearwards from the button 74. The pin 741 may be inserted into the pin hole 733 in the first slider 73. The knob 742 may be inserted into the slot 72S in the cover 72, and may project in a rearward direction of the cover 72. The width of the knob 742 in a rightward-and-leftward direction may be less than the width of the slot 72S in a rightward-and-leftward direction. Consequently, the knob 742 may be movable in the slot 72S in a rightward-and-leftward direction.

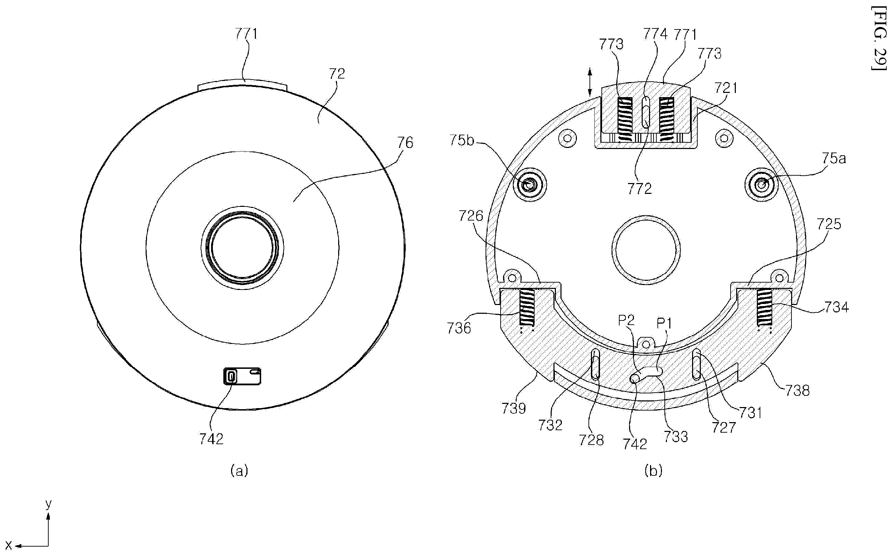

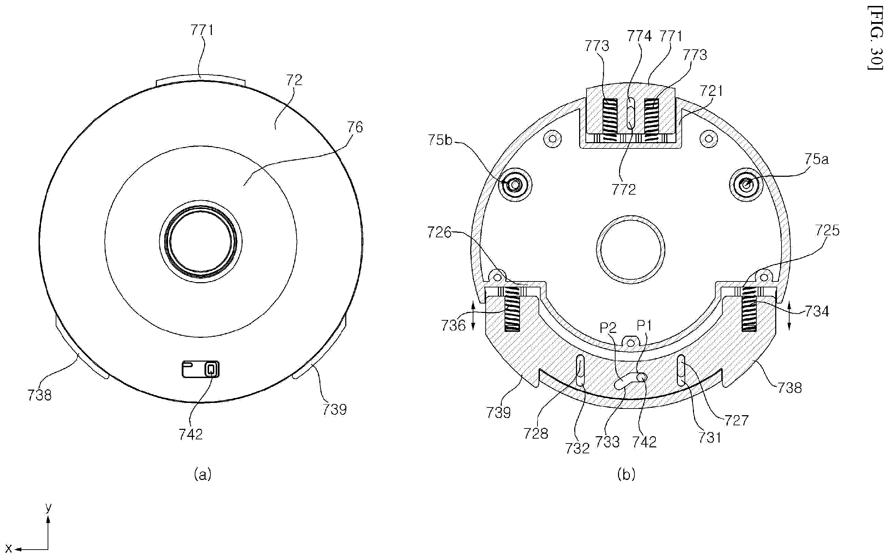

Referring to FIGs. 28 to 30, the mount 70 may be detachably coupled to the head 10 (see FIG. 6). The mount 70 may be detachably coupled to the coupling plate 152 (see FIG. 22) of the back cover 15. FIGs. 29 and 30 are views illustrating the latched state of the mount 70. The latched state may be referred to as a locked state or a coupled state. FIG. 28 is a view illustrating the unlatched state of the mount 60. The unlatched state may be referred to as an unlocked state or an uncoupled state.

Referring to FIGs. 28 and 29, the top hook 771 may be movable in an upward-and-downward direction by the top spring 773. When the top hook 771 is converted into a hidden state in which the top hook 771 is positioned between the plate 71 and the cover 72, the top spring 773 may be compressed. When a user seats the mount 70 on the base plate 151 in the hidden state, the top hook 771 may project in an outward direction of the mount 70 by the restoring force of the top spring 773, and may be latched to the coupling plate 152.

Referring to FIGs. 30 and 29 in that order, when the knob 742 is moved in a rightward-and-leftward direction, the first and second hooks 738 and 739 may be converted into a latched state or an unlatched state. When the knob 742 is moved in the slot 72S in a rightward-and-leftward direction, the pin 741 is moved in the pin hole 733.

Referring to FIG. 29, when the knob 742 is moved leftwards, the pin 741 may be moved along the first path P from the first path P1 and the second path P2, and the slider may be raised relative to the plate 71 and the cover 72 which are coupled to each other. Here, the lower ends of the first and second stoppers 727 and 728 may come into contact with the first and second holes 731 and 728 in the slider 62, thereby restricting movement of the slider 73. When the movement of the slider 73 is restricted by the stoppers 727 and 728, the slider 73 may be moved upwards while compressing the first and second springs 734 and 736. As the slider 73 is moved upwards, the first and second hooks 738 and 739 may be positioned between the plate 71 and the cover 72 (a hidden state), releasing the mount 70 and the back cover 75 from the latched state and thereby allowing a user to remove the mount 70 from the head 10.

Referring to FIGs. 29 and 30 in that order, when the knob 742 is moved rightwards, the pin 741 may be moved along the second path P2 from the first path P1. Here, the slider 72 may be moved downwards by the restoring force of the first and second springs 734 and 735. Here, when the upper ends of the first and second stoppers 727 and 728 catch on the first and second holes 731 and 732, movement of the slider 73 may be restricted. As the slider 73 is moved downwards, the first and second hooks 738 and 739 may project through the first and second cutout portions 7291 and 7292 in a radial direction of the mount 70, and may then be inserted into the coupling groove in the coupling plate 152. Consequently, the mount 70 and the back cover 15 may be latched, thereby allowing a user to couple the mount 70 to the head 10.

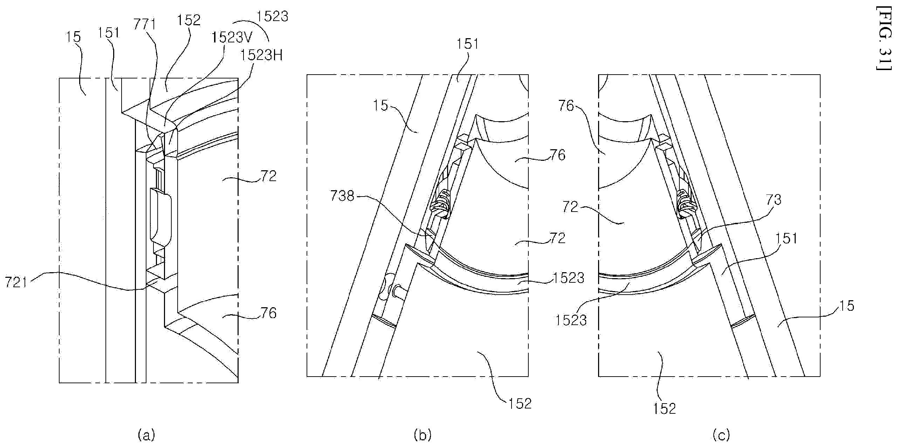

FIG. 31 is a view illustrating the latching sequence of the mount 70. Referring to (a) of FIG. 31, a user may seat the mount 70 on the base plate 151 in the state in which the top hook 771 is hidden. Here, the top hook 771 may project outwards from the mount 70 and may then be latched to the coupling groove by the restoring force of the top spring 773.

Referring to (b) and (b) of FIG. 31, a user may couple the first and second hooks 738 and 739 by first coupling the top hook 771 and then manipulating the button 74. A user may latch the first and second hooks 738 and 739 to the coupling groove by moving the knob 742 rightwards after coupling the top 771. Consequently, the mount 70 may be coupled to the head 10.

When the mount 70 is separated from the head 10, a user may move the knob leftwards to release the first and second hooks 738 and 739 from the state latched to the coupling groove. Subsequently, a user may draw the mount 70 out of the head 10 downwards.

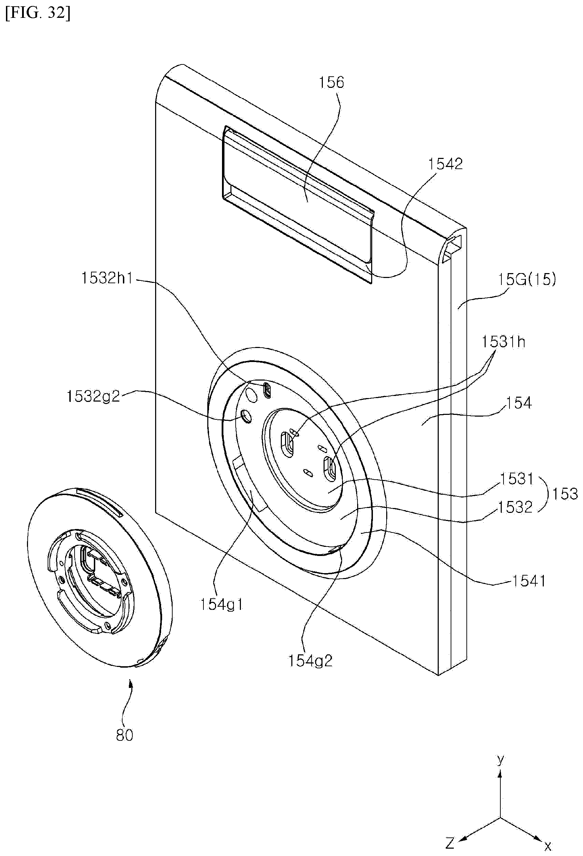

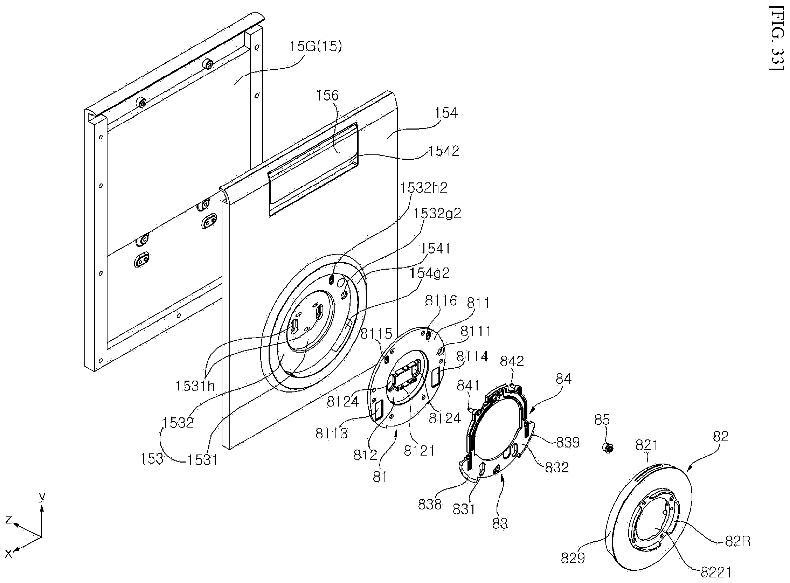

Referring to FIGs. 32 and 33, the head 10 may include a mount portion 15G, and a base plate 153 and a coupling plate 154 which are coupled to the mount portion 15G. The mount portion 15G may be formed at the back cover 15.

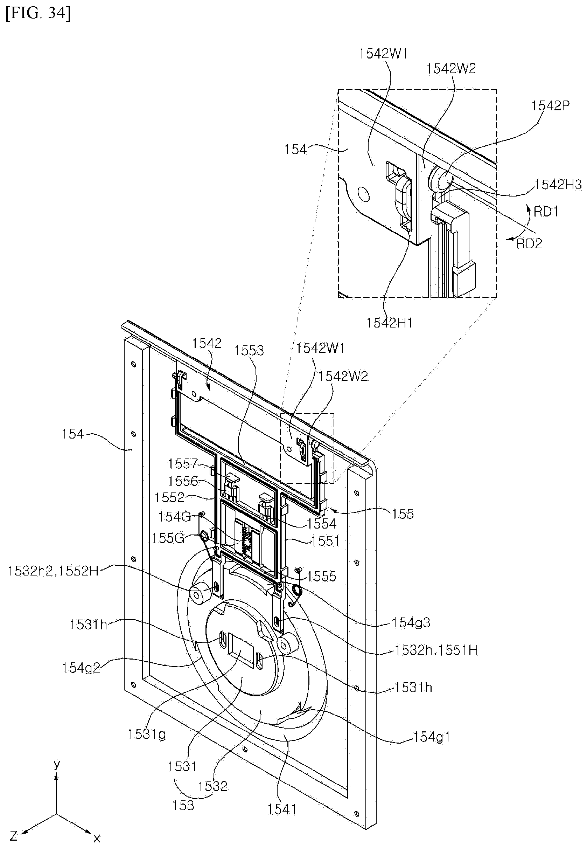

The base plate 153 may have the shape of a circle. The mount 80 may be seated on the base plate 153. The base plate 153 may include a first part 1531 and a second part 1532. The first part 1531 may be depressed forwards from the second part 1532. The first part 1531 may include two holes 1531h which are respectively aligned with two holes 8124 in the first plate 81. A magnet groove 1531g (see FIG. 34) into which a magnet (not shown) is inserted may be formed in the rear surface of the first part 1531. The magnet groove 1531g (see FIG. 34) may be positioned between the two holes 8124 in the first part 1531.

The second part 1532 may include a boss seating portion 1532g1. The boss seating portion 1532g1 may be a groove which is depressed forwards from the rear surface of the second part 1532. The second part 1532 may include a protrusion seating portion 1532g2. The protrusion seating portion 1532g2 may be a groove which is depressed forwards from the rear surface of the second part 1532. The protrusion seating portion 1532g2 may be spaced apart from the boss seating portion 1532g1 in a rightward-and-leftward direction. For example, the protrusion seating portion 1532g2 may be positioned to the left of the first part 1531, and the boss seating portion 1532g1 may be positioned to the right of the first part 1531.

The second part 1532 may include rear pin holes 1532h1 and 1532h2. Each of the rear pin holes 1532h1 and 1532h2 may be a long hole which extends in an upward-and-downward direction. The rear pin holes 1532h1 and 1532h2 may include a plurality of rear pin holes. For example, the rear pin holes 1532h1 and 1532h2 may include a first rear pin hole 1532h1 and a second rear pin hole 1532h2 which are spaced apart from each other. The first rear pin hole 1532h1 may be positioned to the left of the first part 1531. The second rear pin hole 1532h2 may be positioned to the right of the first part 1531.

The coupling plate 154 may include a rib 1541. The rib 1541 may project rearwards from the front surface of the coupling plate 154. The rib 1541 may be depressed rearwards from the front surface of the coupling plate 154. The rib 1541 may define the boundary of the base plate 153. The rib 1541 may define the boundary of the second part 1532 of the base plate 153.

Coupling grooves 154g1, 154g2 and 154g3 may be formed in the inner lateral side surface of the rib 1541. The coupling grooves 154g1, 154g2 and 154g3 may include a plurality of coupling grooves. For example, the coupling grooves 154g1, 154g2 and 154g3 may include first to third coupling grooves 154g1, 154g2 and 154g3 which are spaced apart from one another in a circumferential direction of the rib 1541. The first coupling groove 154g1 may be positioned at a left lower portion of the rib 1541. The second coupling groove 154g2 may be positioned at a right lower portion of the rib 1541. The third coupling groove 154g3 may be positioned at an upper portion of the rib 1541, and may be positioned between the first and second coupling grooves 154g1 and 154g2. A first hook 838, which will be described later, may be inserted into the first coupling groove 154g1, a second hook 839, which will be described later, may be inserted into the second coupling groove 154g2, and a top hook 821, which will be described later, may be inserted into the third coupling groove 154g3.

The coupling plate 154 may include a handle mounting portion 1542. The handle mounting portion 1542 may be positioned adjacent to the upper side of the coupling plate 154. The handle mounting portion 1542 may be a groove which is formed by depressing a portion of the coupling plate 154 forwards. A handle 156, which will be described later, may be inserted into and coupled to the handle mounting portion 1542.

Referring to FIGs. 34, 35 and 36, the handle mounting portion 1542 may include a base wall 1542W1, and two side walls 1542W2 which are formed at opposite ends of the base wall 1542W1 and are connected to the rear surface of the coupling plate 154.

A handle coupling hole 1542H1 may be formed in the base wall 1542W1. The handle coupling hole 1542H1 may be formed through the base wall 1542W1 in a forward-and-backward direction. The handle coupling hole 1542H1 may include a first hole area, which is elongated in an upward-and-downward direction, and a second hole area, which extends from a portion of the first hole area. The second hole area may extend from the upper end of the first hole area toward the central line of the head 10 in an upward-and-downward direction. The handle coupling hole 1542H1 may include two handle coupling holes 1542H1. Each of the two handle coupling holes 1542H1 may be positioned adjacent to a corresponding one of opposite ends of the handle mounting portion 1542.

A first shaft pin hole 1542H2 may be formed in the side wall 1542W2. The first shaft pin hole 1542H2 may be formed through the side wall 1542W2 in a rightward-and-leftward direction. A shaft pin 1542P may be inserted into the first shaft pin hole 1542H2. The first shaft pin hole 1542H2 may be formed in each of two shaft walls 1542W2.

A first link pin hole 1542H3 may be formed in the side wall 1542W2. The first link pin hole 1542H3 may be formed through the side wall 1542W2 in a rightward-and-leftward direction, and may be positioned below the first shaft pin hole 1542H2. The first link pin hole 1542H3 may be a long hole which is elongated in an upward-and-downward direction. The first link pin hole 1542H3 may be formed in each of two side walls 1542W2.

A handle 156 may be coupled to the handle mounting portion 154. The handle 156 may be rotatably coupled to the handle mounting portion 154. The handle 156 may include a shaft 1561. The shaft 1561 may be positioned adjacent to one side of the handle 156, and may extend in a longitudinal direction of the one side of the handle 156. For example, the handle 1561 may be positioned adjacent to the upper side of the handle 156, and may extend in a longitudinal direction of the upper side of the handle 156.

The handle 156 may include a coupler 1562. The coupler 1562 may project rearwards from each of opposite ends of the handle 156. The coupler 1562 may include two couplers 1562 which are respectively formed at opposite ends of the handle 156. The coupler 1562 may be positioned outside the end of the shaft 1561, and may be spaced apart from the end of the shaft 1561. The coupler 1562 may be aligned with the handle coupling hole 1542H1, and may be inserted into the handle coupling hole 1542H1.

The coupler 1562 may include a second shaft pin hole 1563. The second shaft pin hole 1563 may be formed through the coupler 1562 in a rightward-and-leftward direction. The second shaft pin hole 1563 may be aligned with the first shaft pin hole 1542H2. The shaft pin 1542P may sequentially pass the first shaft pin hole 1542H2 and the second shaft pin hole 1563, and may be fastened to the shaft 1561. Consequently, the handle 156 may be rotated about the shaft 1561 in a first rotational direction RD1 or a second rotational direction RD2 opposite the first rotational direction RD1.

The coupler 1562 may include a second link pin hole 1564. The second link pin hole 1564 may be formed through the coupler 1562 in a rightward-and-leftward direction. The second link pin hole 1564 may be positioned below the second shaft pin hole 1563. At least a portion of the second link pin hole 1564 may have a predetermined curvature. For example, the second link pin hole 1564 may be formed to have an arc shape. The second link pin hole 1564 may include a first area A1 adjacent to the second shaft pin hole 1563, a second area A2 positioned farther from the second shaft pin hole 1563 than the first area A1, and a third area A3 connecting the first area A1 to the second area A2. The second area A2 may be positioned in front of the first area A1. A portion of the second link pin hole 1564 may be aligned with the first link pin hole 1542H3.

A link 155 may be positioned between the mount portion 15G (see FIG. 33) and the coupling plate 154, and may be coupled to the coupling plate 154. The link 155 may include a first link 1551 and a second link 1552.

The first link 1551 may extend in an upward-and-downward direction. A first coupling pin 1551P, which projects in a direction intersecting the longitudinal direction of the first link 1551, may be formed at one end of the first link 1551. The first coupling pin 1551P may sequentially pass through the first link pin hole 1542H3 formed in the left side wall 1542W2 of the handle mounting portion 1542 and the second link pin hole 1564 formed in the left coupler 1562 of the handle 156. A first pin hole 1551H, which is aligned with the first rear pin hole 1532h1, may be formed in the other end of the first link 1551.

The second link 1552 may extend in an upward-and-downward direction. A second coupling pin 1552p, which projects in a direction intersecting the longitudinal direction of the second link 1552, may be formed at one end of the second link 1552. The second coupling pin 1552p may sequentially pass through the first link pin hole 1542H3 formed in the right side wall 1542W2 of the handle mounting portion 1542 and the second link pin hole 1564 formed in the right coupler 1562 of the handle 156. A second pin hole 1552H, which is aligned with the second rear pin hole 1532h2, may be formed in the other end of the second link 1552.

Each of the first pin hole 1551H and the second pin hole 1552H may be a long hole which is elongated in an upward-and-downward direction.

The link 155 may include connecting links 1553, 1554 and 1555, which are disposed between the first link 1551 and the second link 1552 to connect the first link 1551 and the second link 1552 to each other. The connecting links 1553, 1554 and 1555 may extend in a direction intersecting the longitudinal direction of the first and second links 1551 and 1552. The connecting links 1553, 1554 and 1555 may include first to third connecting links 1553, 1554 and 1555 which are spaced apart from one another in the longitudinal direction of the first and second links 1551 and 1552.

A spring holder 1556 may be formed at the second connecting link 1554. A tension spring (not shown), which is compressed in an upward-and-downward direction, may be positioned at the spring holder 1556. A fixed wall 1557, which is positioned above the spring holder 1556 and to which the upper end of a tension spring (not shown) is fixed, may be formed at the rear surface of the coupling plate 154.

A gear 155G, which extends in the longitudinal direction of the first and second links 1551 and 1552, may be formed at the third connecting link 1555. The gear 155G may be engaged with a wheel gear 154G which is rotatably coupled to the coupling plate 154.

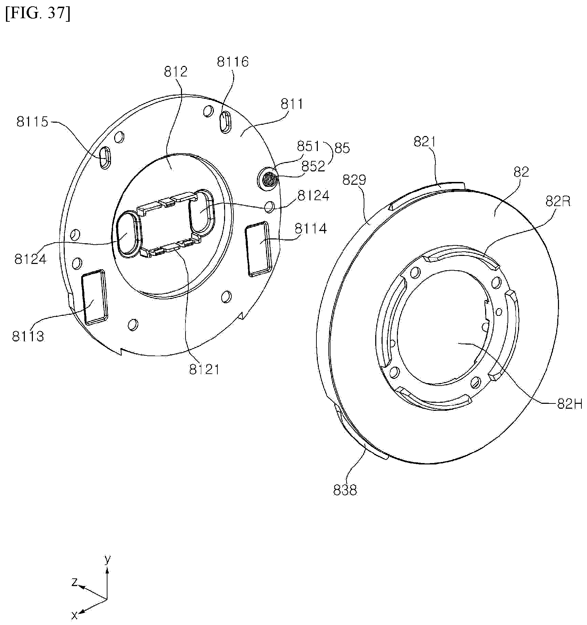

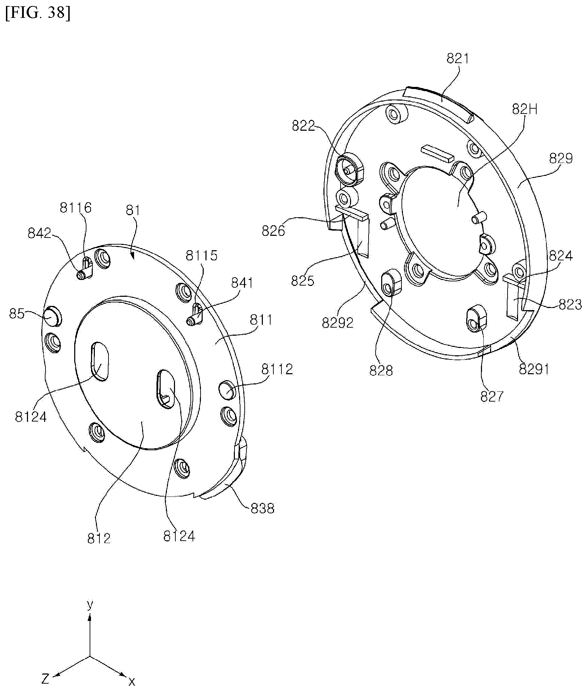

Referring to FIGs. 37 and 38, a mount 80 may include a plate 81. The plate 81 may include a first plate 811 and a second plate 812 which projects forwards from the first plate 811. The first plate 811 and the second plate 8122 may be formed integrally with each other.

The first plate 811 may include a boss hole 8111. The boss hole 8111 may be formed through an eighth plate 611 in a forward-and-backward direction, and may be aligned with a boss seating portion 153g1 of the base plate 153.

The first plate 811 may include a protrusion 8112. The protrusion 8112 may project forwards from the eighth plate 811, and may be aligned with a protrusion seating portion 153g2 of the base plate 153.

The first plate 811 may include a first front groove 8113 and a second front groove 8114. The first front groove 8113 and the second front groove 8114 may be depressed forwards from the rear surface of the first plate 811. The first front groove 8113 and the second front groove 8114 may be spaced apart from each other, and may overlap each other in a rightward-and-leftward direction. The first front groove 8113 may be positioned to the left of the second plate 812, and the second front groove 8114 may be positioned to the right of the second plate 812.

The first plate 811 may include a first front pin hole 8115 and a second front pin hole 8116. The first front pin hole 8115 and the second front pin hole 8116 may be spaced apart from each other. Each of the first front pin hole 8115 and the second front pin hole 8116 may be a long hole which is elongated in an upward-and-downward direction. The first front pin hole 8115 may be aligned with the first rear pin hole 1532h in the base plate 153. The second front pin hole 8116 may be aligned with the second rear pin hole 1532h2 in the base plate 153.

The second plate 812 may be formed in the center of the first plate 811. The second plate 812 may be depressed forwards from the rear surface of the first plate 811. The hole 8124 in the second plate 812 may be formed through the second plate 812 in a forward-and-backward direction. The hole 8124 may include a plurality of holes. For example, the plurality of holes 8124 may include two holes 8124 which are spaced apart from each other in a rightward-and-leftward direction.

The second plate 812 may include a magnet holder 8121. The magnet holder 8121 may project rearwards from the rear surface of the second plate 812. A magnet (not shown) may be inserted into the magnet holder 8121, and may be surrounded thereby.

The magnet (not shown) mounted on the second plate 812 and the magnet (not shown) mounted on the base plate 153 may be opposite to each other with respect to the base plate 153 and/or the second plate 812. The magnet (not shown) mounted on the second plate 812 and the magnet (not shown) mounted on the base plate 153 may have polarities opposite to each other. The magnet (not shown) mounted on the second plate 812 and the magnet (not shown) mounted on the base plate 153 may provide magnetic coupling force between the mount 80 and the head 10. By virtue of the magnetic coupling force, the mount 80 may be attached to the head 10.

The mount 80 may include a cover 82. The cover 82 may be positioned behind the plate 81, and may be coupled to the plate 81. The cover 82 may have a mount hole 82H formed in the center thereof. A rib 82R of the cover 82 may project rearwards from the rear surface of the cover 82. The sleeve 66 (see FIGs. 17 to 19) may be coupled to the mount hole 82H2 in the cover 82.

The cover 82 may include a side portion 829. The side portion 829 may extend along the periphery of the cover 82 to form the side surface of the cover 82. Cutout portions 8291 and 8292 may be formed in the side portion 829. The cutout portions 8291 and 8292 may be formed by cutting portions of the side portion 829. The cutout portions 8291 and 8292 may include a plurality of cutout portions. The plurality of cutout portions 8291 and 8292 may include a first cutout portion 8291 and a second cutout portion 8292. The first cutout portion 8291 may be aligned with the first hook 838, and may receive the first hook 838 therein. The second cutout portion 8292 may be aligned with the second hook 839, and may receive the second hook 839 therein. The top hook 821 may project from the side portion 829 in a radial direction of the cover 82. The top hook 821, the first cutout portion 8291 and the second cutout portion 8292 may be spaced apart from one another in a circumferential direction of the cover 82.

The cover 82 may include a boss coupler 822. A boss 85 may be coupled to the boss coupler 822. The boss coupler 822 may include a body (no reference numeral) and a protrusion (no reference numeral). The body of the boss coupler 822 may project forwards from the cover 82, and may have the shape of a ring. The rear end of a boss cap 851 may come into contact with the body of the boss coupler 822, and a tension spring 852 may be positioned in the body. The protrusion of the boss coupler 822 may project forwards from the cover 82, and may be surrounded by the ring-shaped body. The protrusion of the boss coupler 822 may be inserted into the tension spring 852 of the boss 85 so as to support the tension spring 852. The boss coupler 822 may be aligned with the boss hole 8111 in the plate 81 and the boss seating portion 1531g1 of the back cover 15.

The cover 82 may include a first rear groove 823. The first rear groove 823 may be depressed rearwards from the front surface of the cover 82. The first rear groove 823 may extend in an upward-and-downward direction. The first rear groove 823 may be aligned with first front groove 8113 in the plate 81.

The cover 82 may include a first wall 824. The first wall 824 may project forwards from the front surface of the cover 82. The first wall 824 may be positioned at the upper end of the first rear groove 823. The first wall 824 may extend in a direction intersecting a direction in which the first rear groove 823 extends. The first wall 824 may extend in a rightward-and-leftward direction.

The cover 82 may include a second rear groove 825. The second rear groove 825 may be depressed rearwards from the front surface of the cover 62. The second rear groove 825 may extend in an upward-and-downward direction. The second rear groove 825 may be aligned with the second front groove 8114 in the plate 81. The second rear groove 825 and the first rear groove 824 may be spaced apart from each other in a rightward-and-leftward direction. The first rear groove 824 may be positioned to the left of the mount hole 82H, and the second rear groove 825 may be positioned to the right of the mount hole 82H.

The cover 82 may include a second wall 826. The second wall 826 may project forwards from the front surface of the cover 82. The second wall 826 may be positioned at the upper end of the second rear groove 825. The second wall 826 may extend in a direction intersecting a direction in which the second rear groove 825 extends. The second wall 826 may extend in a rightward-and-leftward direction.

The cover 82 may include a first stopper 827. The first stopper 827 may project forwards from the front surface of the cover 82. The first stopper 827 may be aligned with a first hole 831 in a slider 83. The first stopper 827 may be positioned below the mount hole 82H.

The cover 82 may include a second stopper 828. The second stopper 828 may project forwards from the front surface of the cover 82. The second stopper 828 may be aligned with a second hole 832 in the slider 83. The second stopper 828 may be positioned below the mount hole 82H. The first stopper 827 and the second stopper 828 may be disposed below the mount hole 82H, and may be spaced apart from each other in a rightward-and-leftward direction. The first stopper 827 may be positioned to the left of the second stopper 828, and the second stopper 828 may be positioned to the right of the first stopper 827. The cover 82 may include the second stopper 828.

The mount 80 may include the boss 85. The boss 85 may include the boss cap 851 and the tension spring 852 inserted into the boss cap 851. The boss 85 may be inserted into the boss hole 8111 in the first plate 811, and may project in a forward direction of the first plate 811. When the mount 80 is coupled to the head 10, the boss 85 may come into contact with the boss seating portion 153g1 of the back cover 15. A user may determine whether the head 10 is coupled to the mount 80 depending on contact between the boss 85 and the boss seating portion 153g1.

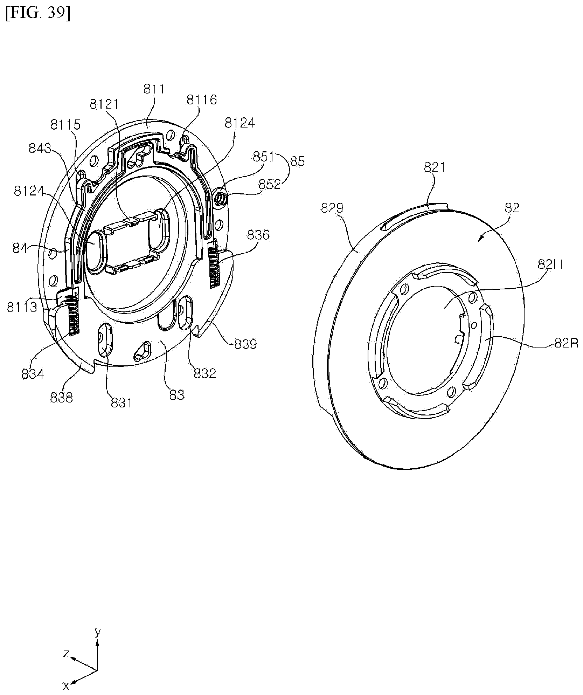

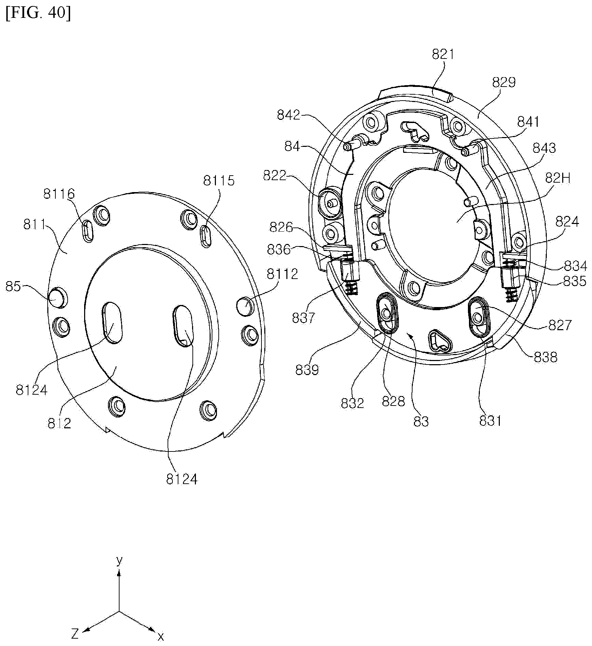

Referring to FIGs. 39 and 40 in conjunction with FIGs. 37 and 38, the mount 80 may include the slider 83. The slider 83 may be positioned between the plate 81 and the cover 82. The slider 83 may be movably coupled to the plate 81 and the cover 82. For example, the slider 82 may be movable in an upward-and-downward direction.

The slider 83 may extend in a circumferential direction of the plate 81, and may face the second plate 812. The slider 83 may be formed to have an arc shape. The slider 83 may include the first hole 831 and the second hole 832. Each of the first hole 831 and the second hole 832 may be a long hole which extends in an upward-and-backward direction. The first hole 831 and the second hole 832 may be spaced apart from each other in a rightward-and-leftward direction.

The slider 83 may include a first spring 834 and a second spring 836. The first spring 834 and the second spring 836 may be spaced apart from each other in a rightward-and-leftward direction. The first spring 834 may be adjacent to the first hole 831, and the second spring 836 may be adjacent to the second hole 832. The first spring 834 and the second spring 836 may be compressed and restored in an upward-and-downward direction. Consequently, the slider 3 may be movable in an upward-and-downward direction by the springs 834 and 836.

The slider may include a first holder 835 and a second holder 837. The first holder 835 and the second holder 837 may be formed by pressing a portion of the slider 83 forwards. The first spring 834 may be positioned in the first holder 835, and the second holder 837 may be positioned in the second holder 837.

The slider 83 may include the first hook 838 and the second hook 839. The first hook 838 and the second hook 839 may project radially from the outer peripheral surface of the slider 83. The first hook 838 may be adjacent to the first hole 831, and the second hook 839 may be adjacent to the second hole 832. The first hook 838 may be positioned to the left of the slider 83, and the second hook 839 may be positioned to the right of the slider 83. The first and second hooks 838 and 839 may be formed integrally with the slider 83, and may be moved along with the slider 83.

The slider 83 may be positioned at a lower portion of the first plate 811. The first spring 834 and the first holder 835 may be positioned in the first front groove 8113 in the first plate 811. The second spring 835 and the second holder 836 may be positioned in the second front groove 8114 in the first plate 811.

The mount 80 may include a link connector 84 coupled to the slider 83. The link connector 84 may extend upwards from the slider 83, and may extend along the boundary between the second plate 812 and the first plate 811. The link connector 84 may include a first pin 841 and a second pin 842. The first pin 841 may be aligned with the first front pin hole 8115, the first rear pin hole 1532h1 and the first pin hole 1551H. The first pin 841 may sequentially pass through the first pin hole 8115, the first rear pin hole 1532h1 and the first pin hole 1551H. The second pin 842 may be aligned with the second front pin hole 8116, the second rear pin hole 1532h2 and the second pin hole 1552H. The second pin 842 may sequentially pass through the second front pin hole 8116, the second rear pin hole 1532h2 and the second pin hole 1552H.

The link connector 84 may be formed integrally with the slider 83.

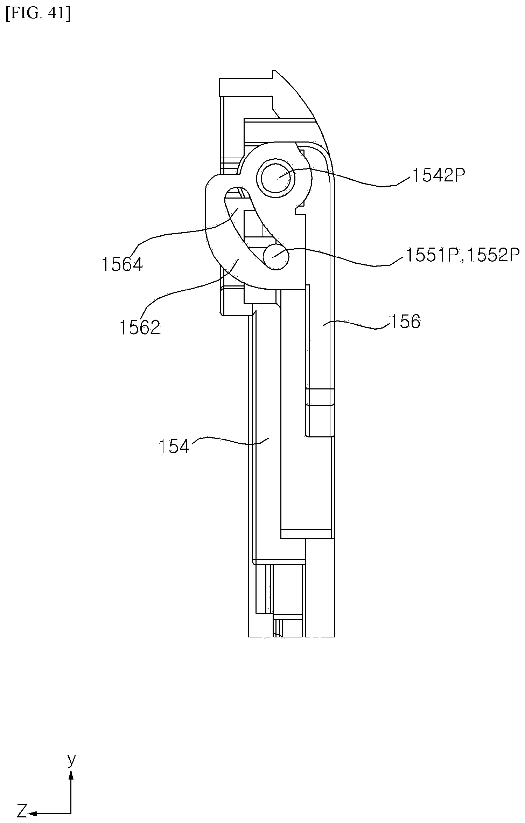

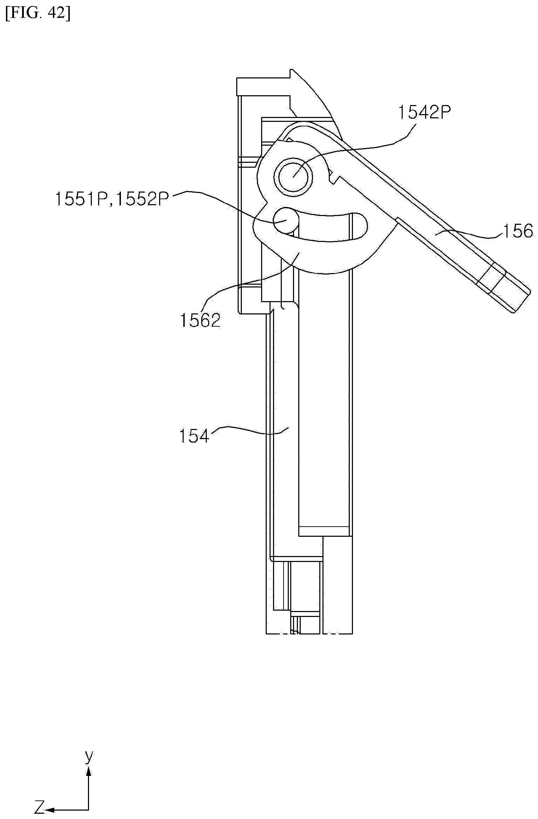

Referring to FIGs. 41 and 42, the mount 80 may be detachably coupled to the head 10 (see FIG. 32). The mount 80 may be detachably coupled to the coupling plate 154 (see FIG. 32) of the back cover 15. A user may separate the mount 80 from the head 10 by rotating the handle 156 in the first rotational direction RD1 (see FIG. 34). A user may couple the mount 80 to the head 10 by rotating the handle 156 in the second rotational direction RD2 (see FIG. 34).

A user may seat the mount 80 on the base plate 154 such that the first hook 838, the second hook 839 and the top hook 821 are respectively aligned with the first guide groove 154g1, the second guide groove 154g2 and the third guide groove 154g3, and may couple the mount 80 to the head 10 by rotating the handle 156 in the second rotational direction RD2 (see FIG. 34). Here, the coupling pins 1551P and 1552P of the link 155 may sequentially pass through the first area A1, the third area A3 and the second area A2 of the second link pin hole 1564 by the rotation of the handle 156. When the handle 156 is rotated in the first rotational direction RD1 (see FIG. 34), the coupling pins 1551P and 1552P may be positioned in the third area A3 of the second link pin hole 1564, and the pins 841 and 842 of the link connector 84 may be inserted into the first pin hole 1551H.

A user may separate the mount 80 from the head 10 by rotating the handle 156 in the second rotational direction RD2 (see FIG. 34). Here, the coupling pins 1551P and 1552P of the link 155 may sequentially pass through the second area A2, the third area A3 and the first area A1 of the second link pin hole 1564 by the rotation of the handle 156. When the handle 156 is rotated in the second rotational direction RD2 (see FIG. 34), the coupling pins 1551P and 1552P may be positioned in the first area A1 of the second link pin hole 1564, and the pins 841 and 842 of the link connector 84 may be separated from the first rear pin hole 1532h1 and the first pin hole 1551H.

Referring to FIGs. 1 to 42, the display device according to an aspect of the present disclosure may include: the head 10 including the display panel 11; the stand 20, 30, 50 and 40 supporting the head 10 and detachably coupled to the head 10; and the mount 60, 70 and 80 fixed to the stand 20, 30, 50 and 40 between the head 10 and the stand 20, 30, 50 and 40, wherein the mount 60, 70 and 80 may include the slider 63, 73 and 83 coupled to the inside of the mount 60, 70 and 80 and moved in the first direction from one side of the head 10 toward another side of the head 10 or in the second direction opposite to the first direction; and the hook 638, 639, 738, 739, 838 and 839 which extends in the outward direction of the mount 60, 70 and 80 from the slider 63, 73 and 83 in the mount 60, 70 and 80 and which is moved along with the slider 63, 73 and 83.

The mount 60, 70 and 80 may include: the plate 61, 71 and 81 positioned in front of the slider 63, 73 and 83; the cover 62, 72 and 82 coupled to the plate 61, 71 and 81 and opposite to the plate 61, 71 and 81 with respect to the slider 63, 73 and 83; a wall 624, 626, 724, 726, 824 and 826 which protrudes toward the plate 61, 71 and 81 from the cover 62, 72 and 82 and which is positioned above the slider 63, 73 and 83; and the spring 634, 636, 734, 736, 834 and 836 which includes one end fixed to the slider 63, 73 and 83 and the other end fixed to the wall 624, 626, 724, 726, 824 and 826, and which is compressed in the second direction.

The mount 60, 70 and 80 may include: the stopper 627, 628, 727, 728, 827 and 828 which protrudes from the cover 62, 72 and 82 and which has a long side in the first direction or in the second direction; and a hole 631, 632, 731, 732, 831 and 832 which is formed at the slider 63, 73 and 83 and into which the stopper 627, 628, 727, 728, 827 and 828 is inserted, wherein the width of the hole 631, 632, 731, 732, 831 and 832 in the first direction or in the second direction may be greater than the long side of the stopper 627, 628, 727, 728, 827 and 828, and the width of the hole 631, 632, 731, 732, 831 and 832 in the first direction and in the second direction may be equal to the length of the short side of the stopper 627, 628, 727, 728, 827 and 828.

The mount 60 and 70 may include: a slot 62S and 72S formed at the cover 62 and 72 and extending in a direction perpendicular to the first direction; a pin hole 633 and 733 formed at the slider 63 and 73 and including a portion aligned with the slot 62S and 72S; and a button 64 and 74 which is positioned between the plate 61 and 71 and the cover 62 and 72 and which includes a knob 642 and 742 inserted into the slot 62S and 72S and moved along the slot, and a pin 641 and 741 inserted into the pin hole 633 and 733, wherein the pin hole 633 and 733 may include: the first path P1 which extends in a direction intersecting the direction in which the slot 62S and 72S extends; and a second path P2 which extends in a direction intersecting the first path P1.

The first path P1 and the second path P2 may define an acute angle.

The head 10 may include: a back cover 15 which is positioned behind the display panel 11 and to which the display panel 11 is coupled; a coupling plate 152 and 154 which is formed at the back cover 15 and to which the mount 60, 70 and 80 is coupled; and a rib 152 and 154 which is formed at the coupling plate 152 and 154, which surrounds the mount 60, 70 and 80, and at which the coupling groove 1523V, 1523H, 1541g1, 1542g2 and 154g3 is formed, wherein the hook 638, 639, 738, 739, 838 and 839 may be moved in the first direction and may be inserted into the coupling groove 1523V, 1523H, 154g1, 154g2 and 154g3, and the hook 638, 639, 738, 739, 838 and 839 may be moved in the second direction and may be positioned in the mount 60, 70 and 80.

The hook 638, 639, 738, 739, 838 and 839 may include: a first hook 638, 738 and 838; and a second hook 639, 739 and 839 which is spaced apart from the first hook 638, 738 and 838 in a perimeter direction of the mount 60, 70 and 80, and the cover may include the side portion 629, 729 and 829 which extends along a periphery of the cover 62, 72 and 82 and which forms the side surface of the cover 62, 72 and 82, wherein side portion 629, 729 and 829 may include the first cutout portion 6291, 7291 and 8291 which is aligned in the radial direction of the mount 60, 70 and 80, and the second cutout portion 6292 and 7292 and 8292 which is aligned in the radial direction of the mount 60, 70 and 80.

The slider 73 may include: the first slider 73 which is moved in the first direction or in the second direction; and a second slider 77 which is moved in the first direction or in the second direction independently of the first slider 73, and the hook 771, 738 and 739 may include: a first hook 738 formed at the first slider 73; a second hook 739 which is formed at the first slider 73 and which is spaced apart from the first hook 731 in the circumferential direction of the mount 70; and a top hook 771 which is formed at the second slider 739 and which is spaced apart from the first and second hooks 738 and 739 in the circumferential direction of the mount 70.

The display device may include: the first magnet mounted in mount 60 and 80; and the second magnet which is opposite to the first magnet with respect to the plate 61 and 81 and which has a polarity opposite to the first magnet.

The head 10 may include: a boss seating portion 151g1, 723 and 1532g1 formed at the back cover 15, and the mount 60, 70 and 80 may include: a boss 65, 75 and 85 which is coupled to the cover 62, 72 and 82 and is aligned with the boss seating portion 151g1, 723 and 1532g1, wherein the boss 65, 75 and 85 may include a boss cap 651, 751a and 851 which protrudes from the plate 61, 71 and 81, and the tension spring 652, 752a and 852 positioned in the boss cap 651, 751a and 851.

The head 10 may include: a back cover 15 which is positioned behind the display panel 11 and to which the display panel 11 is coupled; a coupling plate 154 which is formed at the back cover 15 and to which the mount 80 is coupled; a handle 156 rotatably coupled to the coupling plate 154; and a link 155 positioned between the back cover 15 and the coupling plate 154 and coupled to the handle 156, and the slider 83 may include a pin 841 and 842 which protrudes from the slider 83 and which is coupled to the link 155.

The handle 156 may include: a shaft 1561 which extends in a direction intersecting the first direction; a coupler 1562 forming a side surface of the handle 156, covering the end of the shaft 561, and spaced apart from the end of the shaft 1561; and a first shaft pin hole 1563 formed at the coupler 1562, and the coupling plate 154 may include: a side wall 1542W2 which faces the coupler 1562; a second shaft pin hole 1542H2 which is formed at the side wall 1542W2 and is aligned with the first shaft pin hole 1563; and a shaft pin 1542P which sequentially passes through the second shaft pin hole 1542H2 and the first shaft pin hole 1563 and which is fastened to the shaft 1561.

The handle 156 may include: a first hole 1564 which is formed at the coupler 1562, spaced apart from the first shaft pin hole 1563, and formed with a curvature, the coupling plate 154 may include: a second hole 1542H3 formed at the side wall 1542W2, including a portion aligned with the first hole 1564, and extending in a direction intersecting the longitudinal direction of the shaft 1561, and the link 155 may include: the coupling pin 1551P and 1552P which protrudes from one end of the link 155 and which sequentially passes through the second hole 1542H3 and the first hole 1564.

The first hole 1564 may include: a first area A1 which is positioned in front of the first shaft pin hole 1563 and which is adjacent to the first shaft pin hole 1563; a second area A2 which is positioned behind the first area A1, which is positioned below the first shaft pin hole 1563, and overlapping with the first shaft pin hole 1563; and a third area A3 connecting the first area A1 to the second area A2, wherein the coupling pin 1551P and 1552P may be positioned in the second area A2 of the first hole 1563 when the handle 156 is rotated about the shaft 1561 in the first rotational direction RD1, and wherein the coupling pin 1551P and 1552P may be positioned in the first area A1 of the first hole RD2 when the handle 156 is rotated about the shaft 1561 in the second rotational direction RD2 opposite to the first rotational direction RD1.

The head 10 may include: the first pin hole 1551H and 1552H which is formed in the other end of the link 155 and which extends in the first direction; and the second pin hole 1532h1 which is formed in the coupling plate 154 so as to be aligned with the first pin hole 1551H and 1552H and which extends in the first direction, the mount 80 may include: the third pin hole 8115 and 8116 which is formed through the mount 80 so as to be aligned with the first and second pin holes 1551H, 1552H, 1532h1 and 1532h2 and which extends in the first direction, and the pin 841 and 842 of the slider 83 may sequentially pass through the third pin hole 8115 and 8116, the second pin hole 1532h1 and 1532h2 and the first pin hole 1551H and 1552H and may be coupled to the link 155.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

The above detailed description is to be construed in all aspects as illustrative and not restrictive. The scope of the present disclosure should be determined by reasonable interpretation of the appended claims, and all changes coming within the equivalency range of the present disclosure are intended to be embraced in the scope of the present disclosure.

## Claims

1. A display device comprising:
a head including a display panel;
a stand supporting the head and detachably coupled to the head; and
a mount positioned between the head and the stand and fixed to the stand,
wherein the mount comprises:
a slider coupled inside the mount and moved in a first direction from one side of the head toward another side of the head or in a second direction opposite to the first direction; and
a hook extending from the slider in an outward direction of the mount from an inside of the mount, and moving along with the slider.

2. The display device of claim 1, wherein the mount comprises:
a plate positioned in front of the slider;
a cover coupled to the plate and opposite to the plate with respect to the slider;
a wall protruding toward the plate from the cover and positioned above the slider; and
a spring which includes one end fixed to the slider and another end fixed to the wall, and which is compressed in the second direction.

3. The display device of claim 2, wherein the mount comprises:
a stopper protruding from the cover and having a long side in the first direction or in the second direction; and
a hole which is formed at the slider and into which the stopper is inserted,
wherein a width of the hole in the first direction or in the second direction is greater than a length of the long side of the stopper and a width of the hole in the first direction and in the second direction corresponds to a length of a short side of the stopper.

4. The display device of claim 2, wherein the mount comprises:
a slot formed at the cover and extending in a direction perpendicular to the first direction;
a pin hole formed at the slider and including a portion aligned with the slot; and
a button which is positioned between the plate and the cover and which includes a knob inserted into the slot and movable along the slot, and a pin inserted into the pin hole,
wherein the pin hole comprises:
a first path extending in a direction intersecting a direction in which the slot extends; and
a second path extending in a direction intersecting the first path.

5. The display device of claim 4, wherein the first path and the second path define an acute angle.

6. The display device of claim 2, wherein the head comprises:
a back cover which is positioned behind the display panel and to which the display panel is coupled;
a coupling plate which is formed at the back cover and to which the mount is coupled; and
a rib which is formed at the coupling plate, which surrounds the mount, and at which a coupling groove is formed,
wherein the hook is moved in the first direction and is inserted into the coupling groove, and
wherein the hook is moved in the second direction and is positioned in the mount.

7. The display device of claim 6, wherein the hook comprises:
a first hook; and
a second hook spaced apart from the first hook in a perimeter direction of the mount, and
wherein the cover comprises a side portion which extends along a periphery of the cover and which forms a side surface of the cover, the side portion including a first cutout portion aligned with the first hook in a radial direction of the mount and a second cutout portion aligned with the second hook in the radial direction of the mount.

8. The display device of claim 1, wherein the slider comprises:
a first slider moved in the first direction or in the second direction; and
a second slider moved in the first direction or in the second direction independently of the first slider, and
wherein the hook comprises:
a top hook formed at the first slider;
a first hook formed at the second slider and spaced apart from the top hook in a circumferential direction of the mount; and
a second hook formed at the second slider and spaced apart from the top hook and the first hook in the circumferential direction of the mount.

9. The display device of claim 2, further comprising:
a first magnet mounted in the mount; and
a second magnet mounted in the head, opposite to the first magnet with respect to the plate, and having a polarity opposite to the first magnet.

10. The display device of claim 6, wherein the head comprises a boss seating portion formed at the back cover, and
wherein the mount comprises a boss coupled to the cover and aligned with the boss seating portion, the boss including a boss cap protruding from the plate and a tension spring positioned in the boss cap.

11. The display device of claim 1, wherein the head comprises:
a back cover which is positioned behind the display panel and to which the display panel is coupled;
a coupling plate which is formed at the back cover and to which the mount is coupled;
a handle rotatably coupled to the coupling plate; and
a link positioned between the back cover and the coupling plate and coupled to the handle, and
wherein the slider comprises a pin protruding from the slider and coupled to the link.

12. The display device of claim 11, wherein the handle comprises:
a shaft extending in a direction intersecting the first direction;
a coupler forming a side surface of the handle, covering an end of the shaft,
and spaced apart from an end of the shaft; and
a first shaft pin hole formed at the coupler, and
wherein the coupling plate comprises:
a side wall facing the coupler;
a second shaft pin hole formed at the side wall and aligned with the first shaft pin hole; and
a shaft pin which sequentially passes the second shaft pin hole and the first shaft pin hole and which is fastened to the shaft.

13. The display device of claim 12, wherein the handle comprises a first hole formed at the coupler, spaced apart from the first shaft pin hole, and formed with a curvature,
wherein the coupling plate comprises a second hole formed at the side wall, including a portion aligned with the first hole, and extending in a direction intersecting a longitudinal direction of the shaft, and
wherein the link comprises a coupling pin which protrudes from one end of the link and which is sequentially inserted into the second hole and the first hole.

14. The display device of claim 13, wherein the first hole comprises:
a first area positioned in front of the first shaft pin hole and adjacent to the first shaft pin hole;
a second area positioned behind the first area, positioned below the first shaft pin hole, and overlapping with the first shaft pin hole; and
a third area connecting the first area to the second area, and
wherein the coupling pin is positioned in the second area of the first hole when the handle is rotated about the shaft in a first rotational direction, and
wherein the coupling pin is positioned in the first area of the first hole when the handle is rotated about the shaft in a second rotational direction opposite to the first rotational direction.

15. The display device of claim 11, wherein the head comprises:
a first pin hole formed at another end of the link and elongated in the first direction; and
a second pin hole formed at the coupling plate, aligned with the first pin hole, and elongated in the first direction,
wherein the mount comprises a third pin hole formed through the mount, aligned with the first and second pin holes, and elongated in the first direction, and
wherein the pin of the slider sequentially passes through the third pin hole, the second pin hole and the first pin hole and is coupled to the link.
